# EUROPEAN PATENT SPECIFICATION

(11) **EP 1 643 693 B1**
(45) Date of publication and mention of the grant of the patent: **28.09.2016**
(21) Application number: 04799588.1
(22) Date of filing: 04.11.2004
(51) Int. Cl.: H04W 36/00

(54) **MOBILE COMMUNICATION METHOD, MOBILE COMMUNICATION APPARATUS, HOME AGENT APPARATUS, ACCESS ROUTER INFORMATION SERVER APPARATUS, AND MOBILE COMMUNICATION SYSTEM**
MOBILKOMMUNIKATIONSVERFAHREN, MOBILKOMMUNIKATIONSVORRICHTUNG, HEIMAGENTVORRICHTUNG, ZUGANGSROUTERINFORMATIONSSERVERVORRICHTUNG UND MOBILKOMMUNIKATIONSSYSTEM
PROCÉDÉ DE COMMUNICATION MOBILE, APPAREIL DE COMMUNICATION MOBILE, AGENT LOCAL, SERVEUR D'INFORMATION DE ROUTEUR D'ACCÉS, ET SYSTÈME DE COMMUNICATION MOBILE

(30) Priority: 04.11.2003 JP 2003374186; 29.10.2004 JP 2004315471
(43) Date of publication of application: 05.04.2006
(73) Proprietor: Panasonic Intellectual Property Management Co., Ltd., Osaka 540-6207 (JP)
(72) Inventor: FUNABIKI, Makoto c/o Matsushita Elec Ind. Co., Ltd, 1-chome, Chuo-ku, Osaka-shi, Osaka (JP); IKEDA, Shinkichi, Yokohama-shi, Kanagawa 224-0006 (JP)
(74) Representative: Balsters, Robert
(86) International application number: PCT/JP2004/016694
(87) International publication number: WO 2005/043840

(56) References cited:
- JP-A- 11 234 289
- JP-A- 2002 125 254
- KYUNGJOO SUH YOUNGJUN PARK JAEKWON OH EUN-HUI BAE SAMSUNG ELECTRONICS: "Access Router Information Protocol (ARIP); draft-suh-mipshop-arip-00.txt" IETF STANDARD-WORKING-DRAFT, INTERNET ENGINEERING TASK FORCE, IETF, CH, 1 October 2003 (2003-10-01), XP015035820 ISSN: 0000-0004
- MARCO LIEBSCH AJOY SINGH (EDITORS) HEMANT CHASKAR DAICHI FUNATO EUNSOO SHIM: "Candidate Access Router Discovery; draft-ietf-seamoby-card-protocol-04.t" IETF STANDARD-WORKING-DRAFT, INTERNET ENGINEERING TASK FORCE, IETF, CH, vol. seamoby, no. 4, 1 September 2003 (2003-09-01), XP015027177 ISSN: 0000-0004
- KOODLI R.: 'Fast handovers for mobile IPv6', [Online] 10 October 2003, XP002294885 Retrieved from the Internet: <URL:http://www.ietf.org/internet-drafts/dr aft-ietf-mobileip-fast-impv6-08.txt>

## Description

### Technical Field

The present invention relates to a mobile communication method, a mobile communication apparatus (a mobile node), a home agent apparatus, an access router information server apparatus, and a mobile communication system, using a mobile IP.

### Background Art

The mobile communication system using the mobile IP includes a mobile communication apparatus (a mobile node) performing communications while moving between sub-networks, a home agent apparatus performing location management of the mobile communication apparatus, a correspondent node connected to the Internet which communicates with the mobile communication apparatus, and access router apparatuses to which the mobile communication apparatus connects in order to communicate with the correspondent node connected to the Internet. In this configuration, one mobile communication method using the conventional mobile IP is described in the document "Mobility Support in IPv6", IETF RFC3775.

First, the mobile communication apparatus, when moving to a different sub-network, receives a router advertisement message from the access router apparatus which belongs to the movement-destination sub-network and generates from prefix information included in the message a care-of address which is temporarily used in the sub-net. After that, the mobile communication apparatus sends a binding update message including its home address and newly generated care-of address to the home agent apparatus. The home agent apparatus receives the binding update message and adds the home address and the care-of address pair included in the received binding update message to a binding cache in which home address and the corresponding care-of address pairs are stored. Then, packets transmitted addressed to the home address of the mobile communication apparatus are intercepted by the home agent apparatus and forwarded to the current care-of address of the mobile communication apparatus.

In the conventional mobile communication method, during a period of time from the movement of the mobile communication apparatus to the different sub-network until when the apparatus registers the care-of address which has been acquired at the movement-destination sub-network in the home agent apparatus, packets arriving addressed to the home address of the mobile communication apparatus are forwarded to the pre-movement care-of address of the mobile communication apparatus from the home agent apparatus, and therefore packet loss occurs.

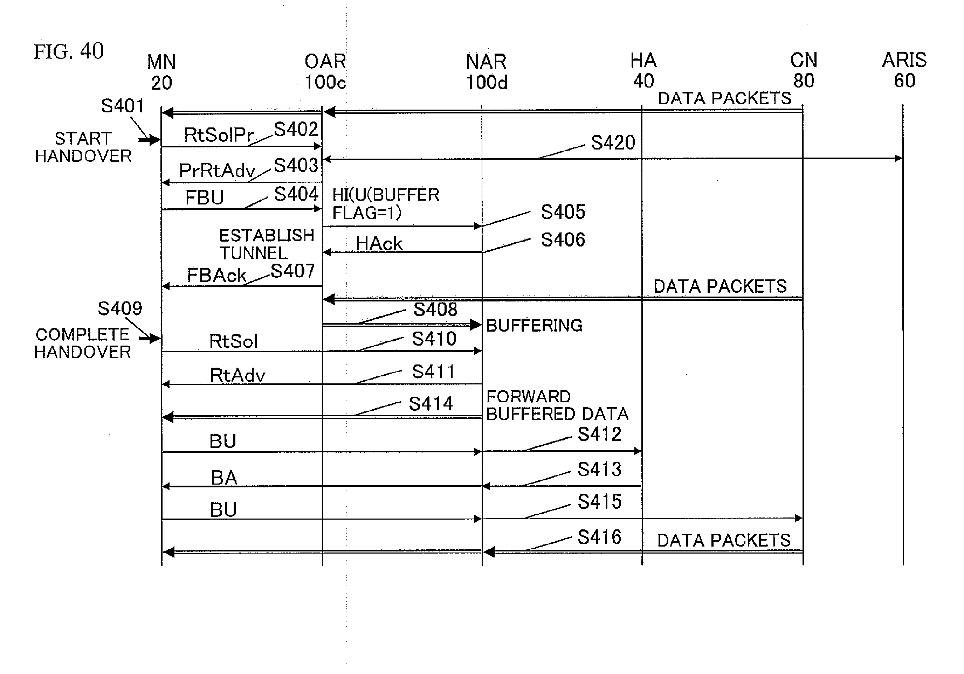

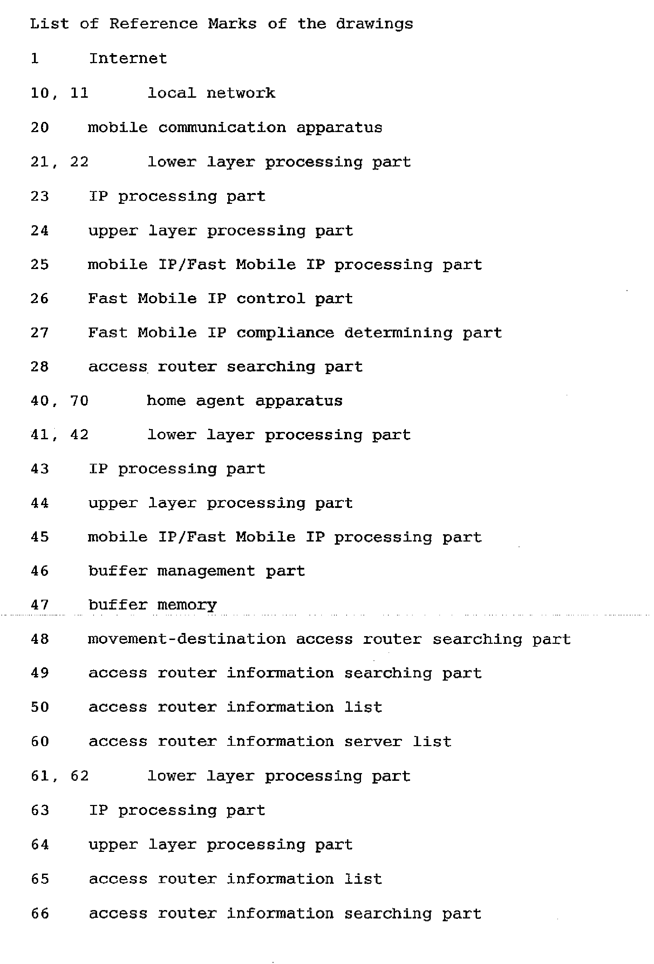

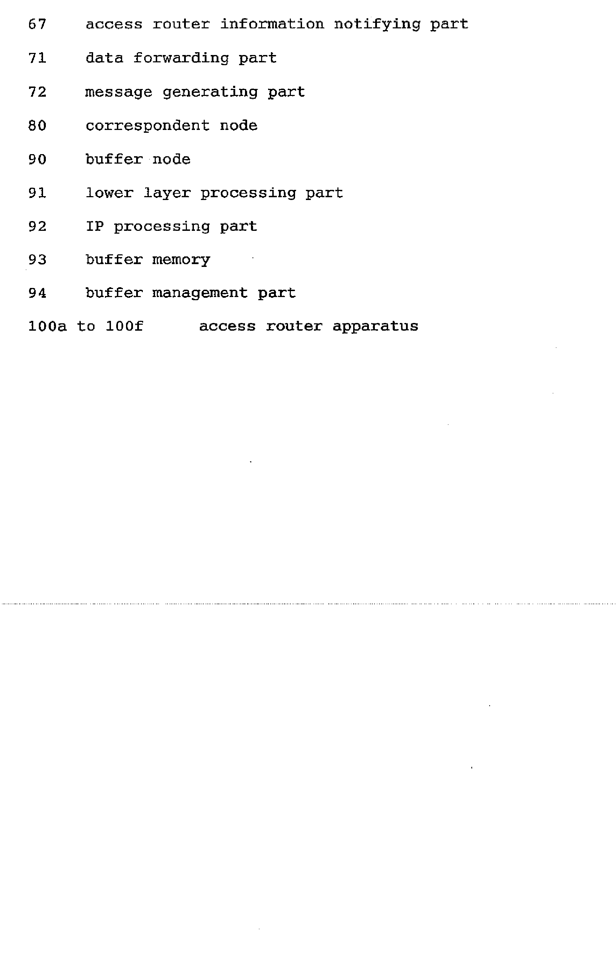

As a method for reducing the packet loss, there is a method of forwarding and buffering packets between access router apparatuses (hereinafter, referred to as "a Fast Mobile IP") described in a document "Fast Handovers for Mobile IPv6". IETF Mobile IP WG. Fig. 40 is a sequence diagram showing operations of the Fast Mobile IP.

In a procedure of the Fast Mobile IP, when the mobile communication apparatus detects the movement-destination access router apparatus (step S3401), it sends a message including a lower layer address of the movement-destination access router apparatus to the pre-movement source access router apparatus (step S3402) and acquires the IP address of the movement-destination access router apparatus (step S3403) . The mobile communication apparatus, after acquiring the IP address, sends to the pre-movement source access router a message requesting that packets transmitted addressed to the care-of address of the mobile communication apparatus be forwarded to the movement-destination access router apparatus (step S3404). After that, the pre-movement source access router apparatus establishes a tunnel between it and the movement-destination access router apparatus, and instructs the movement-destination access router apparatus to buffer the packet temporarily (step S3405, S3406). After that, the pre-movement source access router apparatus sends a verification message indicating that the establishment of the tunnel is completed to the mobile communication apparatus (step S3407). After receiving the verification message, the mobile communication apparatus performs a handover processing in the lower layer (step S3409). After the handover is finished in the lower layer, the mobile communication apparatus sends a message indicating the start of forwarding the buffered packets to the movement-destination access router apparatus (step S3410). When the movement-destination access router apparatus receives the message, it transmits the buffered packets to the mobile communication apparatus (step S3414). The mobile communication apparatus acquires the new subnet prefix from the router advertisement message (step S3411) sent by the movement-destination access router and generates the new care-of address (step S3421), then, updates the binding caches of the home agent apparatus, the contacted correspondent node, and so on (step S3412, step s3413, step S3415). These processes are standard mobile IP processes, described in the document "Mobility Support in IPv6", IETF RFC 3775 (hereinafter, referred to as "standard mobile IP").

As a method for preventing the occurrence of packet loss in the case that the access router apparatuses of the pre-movement source sub-network and the movement-destination sub-network do not comply with the Fast Mobile IP, there is the method described in JP-A-2003-209890.

In the mobile communication method, when it becomes clear that the mobile communication apparatus is in the period when it cannot be contacted, the apparatus sends a telegraphic message informing that the non-contact period has started to the home agent apparatus, and the home agent apparatus which has received the telegraphic message that the non-contact period has started stores data packets addressed to the mobile communication apparatus received by the home agent from that time. When the non-contact period has finished, the mobile communication apparatus sends a telegraphic message that the non-contact period has ended to the home agent, and the home agent apparatus receives the message and forwards the previously stored data packets addressed to the mobile communication apparatus. Then, the mobile communication apparatus receives and processes the data packets forwarded from the home agent apparatus.

Furthermore, as a conventional mobile communication system for reducing packet loss in the mobile IP, there is the system described in JP-A-2002-125254. This is the method that a gateway apparatus installed at the home agent apparatus or between the home agent apparatus and the access router apparatus buffers or bicasts packets addressed to the mobile communication apparatus. In this method, the mobile communication apparatus sends a registration message for performing a double registration of the movement-destination foreign agent apparatus and the pre-movement source foreign agent apparatus in the home agent apparatus and the gateway apparatus. According to the double registration, the home agent apparatus transmits the same packet to the movement-destination foreign agent apparatus and to the pre-movement source foreign agent apparatus (bicast). The home agent apparatus, after receiving the registration message, judges whether the packet has been received in real-time, and if it is real-time traffic, performs bicasting to the pre-movement source foreign agent apparatus and the movement-destination foreign agent apparatus, otherwise, performs buffering.

However, in the conventional mobile communication method described in the document "Fast Handovers for Mobile IPv6" , IETF Mobile IP WG, the tunnel has to be established by exchanging messages between the pre-movement source access router apparatus and the movement-destination access router apparatus, and therefore it is required that both access router apparatuses comply with the Fast Mobile IP. Specifically, when instructing the access router apparatus which does not comply with the Fast Mobile IP to establish the tunnel, the instruction is ignored and packets are lost.

On the other hand, in the conventional mobile communication method described in JP-A-2003-209890, even when both access router apparatuses of the pre-movement source and the movement-destination sub-network comply with the Fast Mobile IP, a tunnel cannot be established, and as a result inefficient forwarding is performed.

In actual networks, since all the access router apparatuses do not necessarily comply with the Fast Mobile IP, there is a problem that the Fast Mobile IP cannot be applied.

Furthermore, in the configuration of JP-A-2002-125254, since it is necessary that processes such as buffering and bicasting are performed frequently, there is a problem that the load of the home agent apparatus becomes high.

The publication Kyungjoo Suh Youngjun Park Jaekwon Oh Eun-Hui Bae, Samsung Electronics: "Access Router Information Protocol (ARIP); draft-suh-mipshop-arip-OO.txt"IETF Standard-Working-Draft, Internet Engineering Task Force, IETF, CH, 1 October 2003, XP015035820ISSN: 0000-0004, relates to the Access Router Information Protocol (ARIP) whereby a mobile host can improve the handoff performance by exchanging, in advance, the information among geographically adjacent access router(AR)s. The described protocol does not need a certain assumption of network topology so that it can be applied to heterogeneous networks as well as homogeneous networks. ARIP can be combined with the protocol such as Fast Handover (for Mobile IPv6) which tries to minimize the handoff latency.

### Disclosure of the Invention

The subject-matter of the invention is defined by the independent claims.

### Brief Description of the Drawings

Fig. 1 is a view showing a configuration of a mobile communication system according to an embodiment 1 of the invention;
Fig. 2 is a diagram showing a configuration of a mobile communication apparatus according to the embodiment 1 of the invention;
Fig. 3 is a diagram showing a configuration of a home agent apparatus according to the embodiment 1 of the invention;
Fig. 4 is a chart showing a data structure of a binding cache according to the embodiment 1 of the invention;
Fig. 5 is a diagram showing a configuration of an access router information server apparatus according to the embodiment 1 of the invention;
Fig. 6 is a first sequence diagram showing operations of the mobile communication system according to the embodiment 1 of the invention;
Fig. 7 is a second sequence diagram showing operations of the mobile communication system according to the embodiment 1 of the invention;
Fig. 8 is a flow chart showing the first operation of the mobile communication apparatus according to the embodiment 1 of the invention;
Fig. 9 is a flow chart showing the second operation of the mobile communication apparatus according to the embodiment 1 of the invention;
Fig. 10 is a flow chart showing a first operation of the home agent apparatus according to the embodiment 1 of the invention;
Fig. 11 is a flow chart showing a second operation of the home agent apparatus according to the embodiment 1 of the invention;
Fig. 12 is a flow chart showing a third operation of the home agent apparatus according to the embodiment 1 of the invention;
Fig. 13 is a flow chart showing operations of the access router information server apparatus according to the embodiment 1 of the invention;
Fig. 14A is a chart showing a first configuration of an access router apparatus information list according to the embodiment 1 of the invention;
Fig. 14B is a chart showing a second configuration of an access router apparatus information list according to the embodiment 1 of the invention;
Fig. 14c is a chart showing a third configuration of an access router apparatus information list according to the embodiment 1 of the invention;
Fig. 15 is a fifth sequence diagram showing operations of the mobile communication system according to the embodiment 1 of the invention;
Fig. 16 is a third sequence diagram showing operations of the mobile communication system according to the embodiment 1 of the invention;
Fig. 17 is a fourth sequence diagram showing operations of the mobile communication system according to the embodiment 1 of the invention;
Fig. 18 is a diagram showing a second configuration of the home agent apparatus according to the embodiment 1 of the invention;
Fig. 19 is a diagram showing a third configuration of the home agent apparatus according to the embodiment 1 of the invention;
Fig. 20 is a flow chart showing a fourth operation of the home agent apparatus according to the embodiment 1 of the invention;
Fig. 21 is a flow chart showing a fifth operation of the home agent apparatus according to the embodiment 1 of the invention;
Fig. 22 is chart showing a format of a router advertisement message according to the embodiment 1 of the invention;
Fig .23 is a chart showing a format of a fast binding acknowledgement message according to the embodiment 1 of the invention;
Fig. 24 is a chart showing a format of a buffering request message according to the embodiment 1 of the invention;

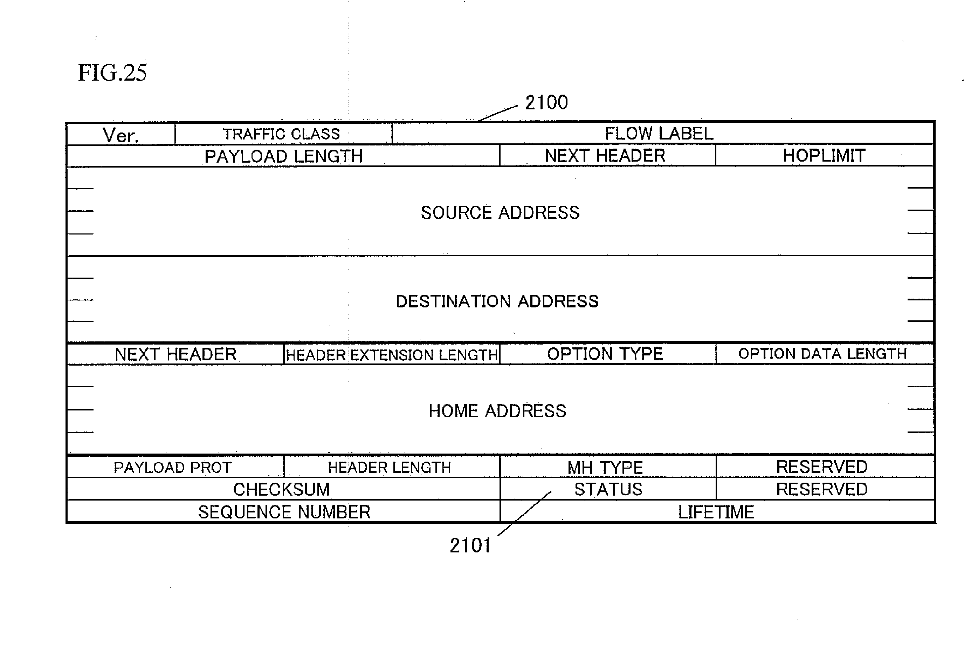

Fig. 25 is a chart showing a format of a buffering response message according to the embodiment 1 of the invention;
Fig. 26 is a chart showing a format of a binding update message according to the embodiment 1 of the invention;
Fig. 27 is a chart showing a format of a router solicitation for proxy according to the embodiment 1, of the invention;
Fig. 28 is a chart showing a proxy router advertisement message according to the embodiment 1 of the invention;
Fig. 29 is a chart showing a format of a fast binding update message according to the embodiment 1 of the invention;
Fig. 30 is a chart showing a format of a request message according to the embodiment 1 of the invention;
Fig. 31 is a chart showing a format of a response message according to the embodiment 1 of the invention;
Fig. 32 is a chart showing a format of a handover initiate message according to the embodiment 1 of the invention;
Fig. 33 is a chart showing a format of a handover acknowledgement message according to the embodiment 1 of the invention;
Fig. 34 is a sixth sequence diagram showing operations of the mobile communication system according to the embodiment 1 of the invention;
Fig. 35 is a view showing a configuration of a mobile communication system according to an embodiment 2 not forming part of the invention;
Fig. 36 is a diagram showing a configuration of a home agent apparatus according to the embodiment 2 not forming part of the invention;
Fig. 37 is a diagram showing a configuration of a buffer node according to the embodiment 2 not forming part of the invention; Fig. 38 is a sequence diagram showing operations of the mobile communication system according to the embodiment 2 not forming part of the invention;
Fig. 39 is a chart showing a format of a buffer-packet transmission start message according to the embodiment 2 not forming part of the invention; and
Fig. 40 is a sequence diagram showing operations of a conventional mobile communication system.

### Best Mode for Carrying Out the Invention

Hereinafter, embodiments of the invention will be explained with reference to the drawings. Note that identical configuration blocks are denoted by identical numerals in the following drawings.

### (Embodiment 1)

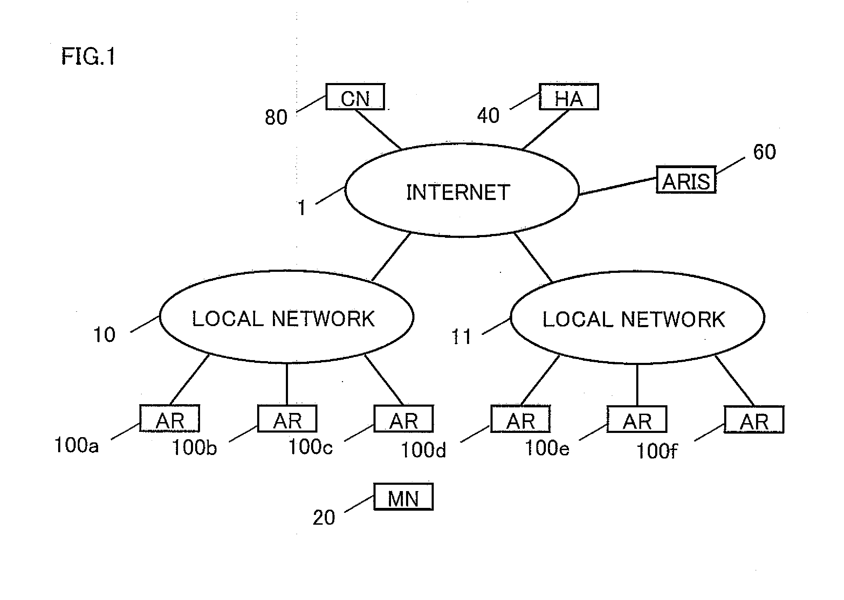

Fig. 1 is a configuration view of a mobile communication system according to the invention.

In Fig. 1, local networks 10, 11 are connected to the Internet and are networks including plural routers and hosts to which an Internet Protocol is applied. A mobile communication apparatus (a mobile node) 20 performs communications using the Internet Protocol, connects to the local network 10 through access router apparatuses 100a to 100c or connects to the local network 11 through access router apparatuses 100d to 100f. A correspondent node 80 performs communications with the mobile communication apparatus 20, a home agent apparatus 40 performs location management of the mobile communication apparatus 20, and an access router information server apparatus 60 stores information of the access router apparatuses 100a to 100c, 100d to 100f on the local networks 10, 11. The correspondent node 80 , the home agent apparatus 40 and the access router information server apparatus 60 connect to the Internet 1.

First, the configuration and operations of the mobile communication apparatus 20 which form the mobile communication system according to the invention will be explained with reference to the drawings.

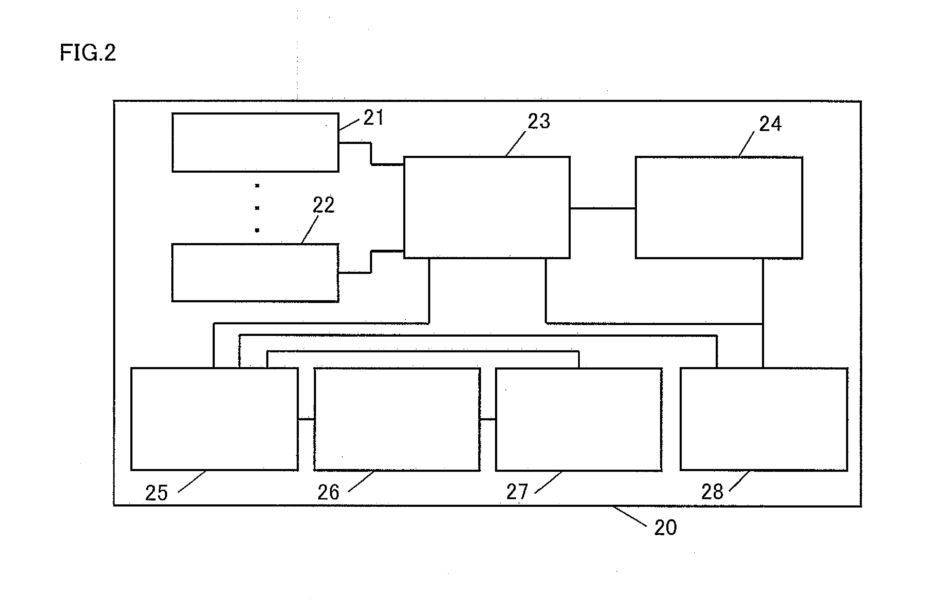

Fig. 2 is a configuration diagram of the mobile communication apparatus 20 according to the invention.

In Fig. 2, a lower layer processing parts 21, 22 perform processes such as modulation, demodulation, and access control, an IP processing part 23 performs packet forwarding and the like using the Internet protocol (IP), and an upper layer processing part 24 performs the control of applications and the management of sessions at layers higher than the IP layer. A mobile IP/Fast Mobile IP processing part 25 implements procedures of standard mobile IP and Fast Mobile IP, a Fast Mobile IP control part 26 performs the control of the mobile IP/Fast Mobile IP processing part 25, with respect to Fast Mobile IP, a Fast Mobile IP compliance determining part 27 determines whether the access router apparatus of a connection destination complies with Fast Mobile IP or not, and an access router searching part 28 acquires information on access router apparatuses of prospective new destinations, to determine a movement-destination access router. Concerning the lower layer processing parts 21, 22, it is sufficient to have at least one part, and it is not always necessary to have two or more.

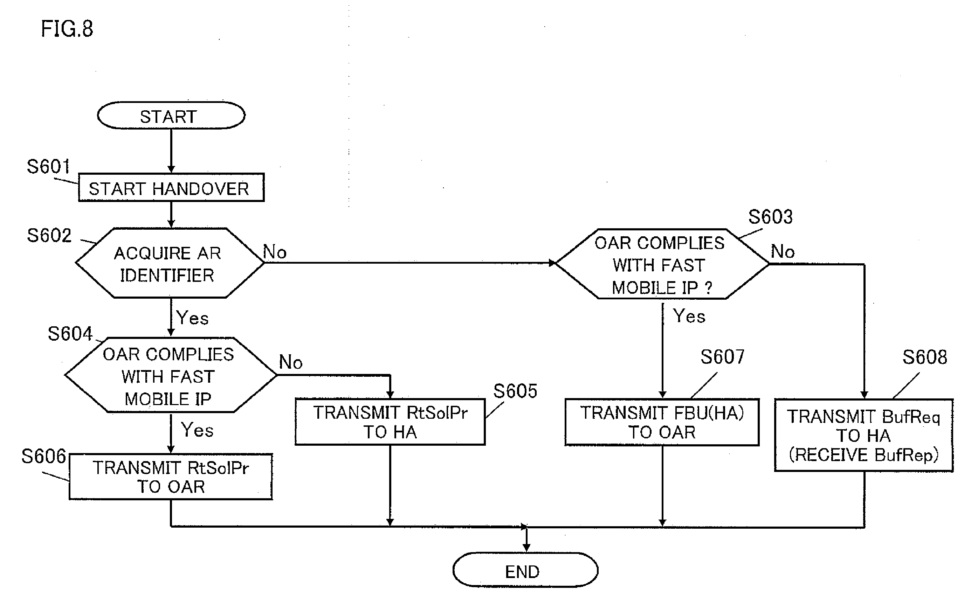

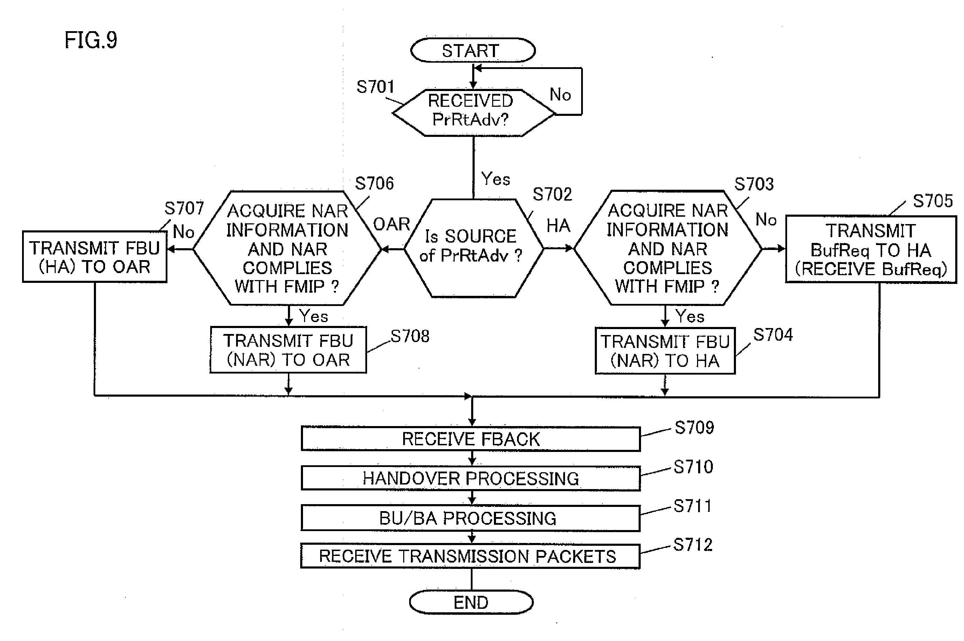

Operations of the mobile communication apparatus 20 constituted as the above will be explained in detail with reference to operation flow charts shown in Fig. 8 and Fig. 9.

Fig. 8 explains operations when the mobile communication apparatus 20 detects a new access router apparatus while moving.

In Fig. 8, first, when the mobile IP/Fast Mobile IP processing part 25, detects that a connection to an access router apparatus 100d different from the access router apparatus 100c which is currently connected is possible, it issues a handover start trigger (step S601). The handover start trigger can be issued at a lower layer or can be issued at an upper layer where there are applications. For example, in the case that the lower layer is IEEE802.11, the reception of a beacon signal from a different access router apparatus (or an access point apparatus connected to the access router apparatus) is regarded as the trigger. When the start of the handover is determined by the beacon signals, the mobile communication apparatus 20 verifies whether a lower layer address (a MAC address, or a cell station ID) of the access router apparatus 100d can be acquired from the received beacon signals.

Hereupon, the mobile IP/fast mobile IP processing part 25 acquires the identifier tag (ID) of the access router apparatus 100d which is to be the movement-destination in the case that it can be acquired when the handover start trigger is issued (step S602). For example, the lower layer address included in the received beacon signals is acquired and made the identifier tag. However, other identifier tags are possible such as the cell station ID.

When the identifier tag of the movement-destination access router apparatus 100d cannot be acquired, whether the pre-movement source access router apparatus 100c is Fast Mobile IP (FMIP) is verified (step S603). Whether the access-router apparatus 100c complies with Fast Mobile IP or not is determined, for example, by referring to a router advertisement message 2400 transmitted by the access router apparatus 100c, in which there an option field which indicates compliance/noncompliance with Fast Mobile IP.

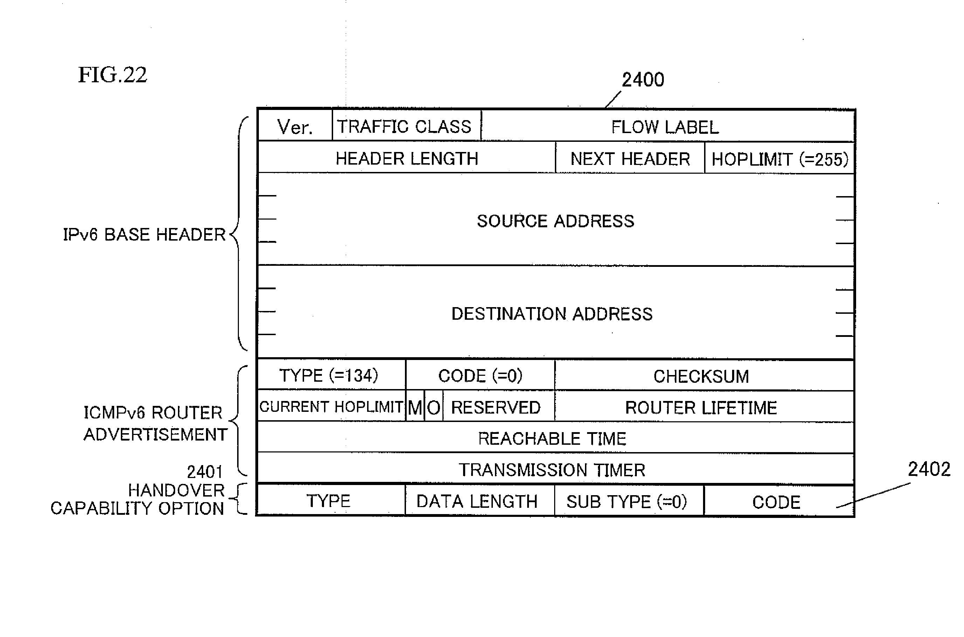

Fig. 22 is a chart showing a format of the router advertisement message 2400.

In Fig. 22, when a value of a code field 2402 in a handover capability option 2401 is "0" , this shows that the access router apparatus complies with Fast Mobile IP. As shown in Fig. 22, an IP header and the like are added to the message, but it is similar to the one used in general. Much the same is true with the following messages.

It can also be concluded that the access router apparatus 100c does not comply with Fast Mobile IP when there is no reply of a certain number of times after the mobile communication apparatus 20 sends a router solicitation for proxy 1400.

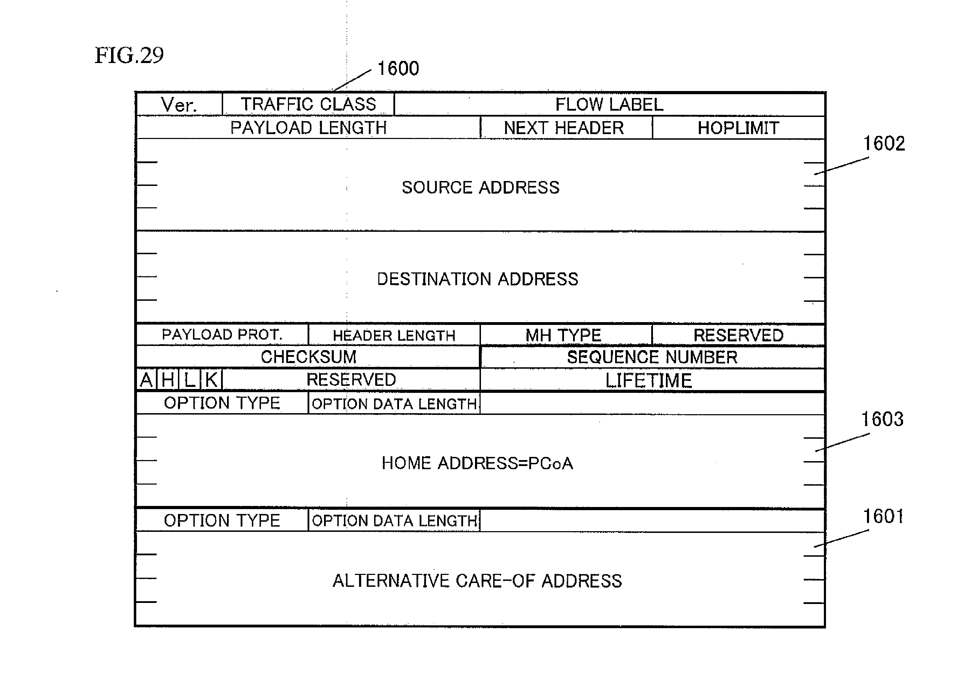

Next, in the case that the pre-movement source access router apparatus 100c complies with Fast Mobile IP, the mobile communication apparatus sends a fast binding update message in which the address of the home agent apparatus is set in a proxy care-of address field to the pre-movement source access router apparatus 100c (step S607). The packet format of the fast binding update message 1600 here is shown in Fig. 29. In this format, the mobile communication apparatus 20 writes its own home address in the home address field 1603 in the fast binding update message 1600 and writes the IP address of the home agent apparatus 40 to which the mobile communication apparatus 20 itself belongs in the proxy care-of address field 1601.

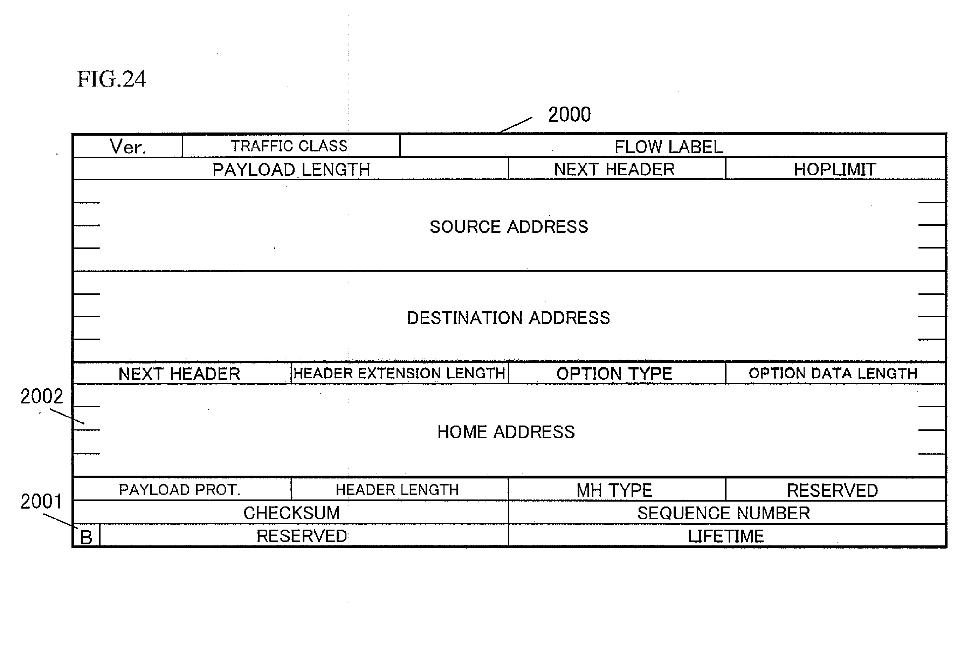

In the case that the pre-movement source access router apparatus 100c does not comply with Fast Mobile IP, the mobile IP/Fast Mobile IP processing part 25 sends a buffering request message 2000 to the home agent apparatus 40 and requests that packets addressed to the home address of the mobile communication apparatus 20 be buffered (step S608). The format of this buffering request message 2000 is shown in Fig. 24. In the message, a B-flag 2001 showing that the buffering is requested is set, and the home address of the mobile communication apparatus 20 is written in a home address field 2002.

On the other hand, in the step S602, when the identifier tag of the movement-destination the access router apparatus 100d can be acquired, the Fast Mobile IP compliance determining part 27 verifies whether the pre-movement source access router apparatus 100c complies with Fast Mobile IP or not (step S604). The compliance/noncompliance with Fast Mobile IP is indicated by the value written in the code field 2402 in the handover capability option 2401, which is added to the router advertisement message 2400 received from the pre-movement source access router apparatus 100c. Alternatively, when there is no reply to a set number of router solicitations for proxy from the mobile communication apparatus 20, it is determined that the pre-movement source access router apparatus 100c does not comply with Fast Mobile IP.

Note that the verification whether the pre-movement source mobile router apparatus 100c complies with Fast Mobile IP can be executed in advance, and in that case, it is necessary to store the compliance separately.

When the Fast Mobile IP compliance determining part 27 determines whether the pre-movement source access router apparatus 100c complies with Fast Mobile IP, it notifies this to the Fast Mobile IP control part 26.

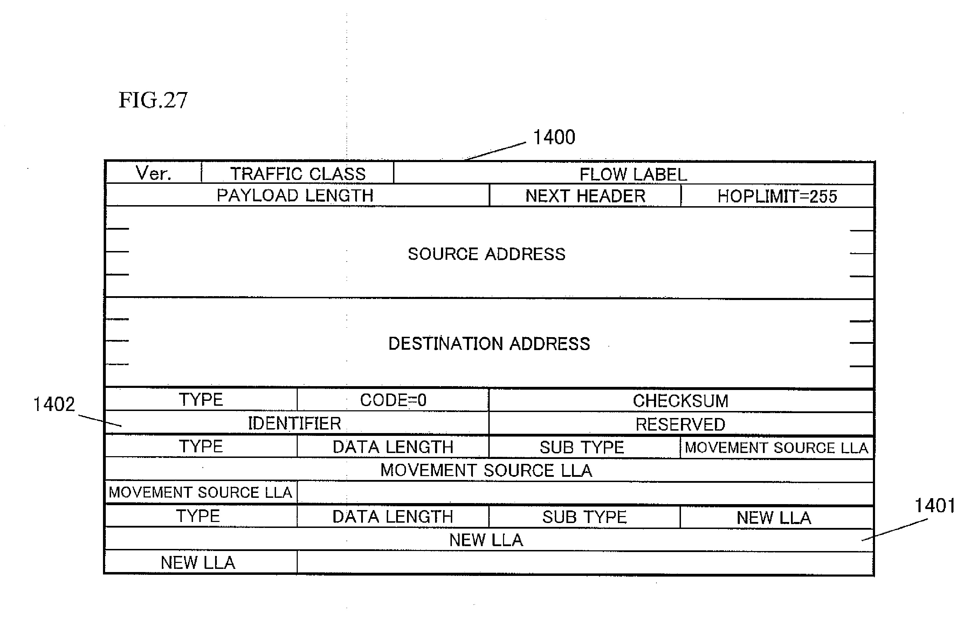

The Fast Mobile IP control part 26 instructs the mobile IP/Fast Mobile IP processing part 25 to send the router solicitation for proxy 1400 to the pre-movement source access router apparatus 100c, and the mobile IP/Fast Mobile IP processing part 25 performs the processes of generating and sending the message (step S606). A format of the router solicitation for proxy 1400 is shown in Fig. 27. At this time, the identifier tag of the movement-destination access router apparatus 100d is written as the identifier tag 1402 of the router solicitation for proxy 1400. In particular, in the case that the identifier tag is the lower layer address, it is written in a new LLA field 1401. The router solicitation for proxy 1400 is transmitted from the mobile IP/Fast Mobile IP processing part 25 to the IP processing part 23, and forwarded to the network from the selected lower layer processing part 21 or 22.

On the other hand, if it is determined that the pre-movement source access router apparatus 100c does not comply with Fast Mobile IP, the Fast Mobile IP control part 26 instructs the mobile IP/Fast Mobile IP processing part 25 to send a router solicitation for proxy 1400 to the home agent apparatus. The transmission contents are same as the case of the step S606.

Next, operations from when the mobile communication apparatus 20 receives a proxy router advertisement message 1500 until it receives a data packet addressed to itself, which were buffered in the home agent apparatus 40 or the movement-destination access router apparatus 100d will be explained with reference to Fig. 9.

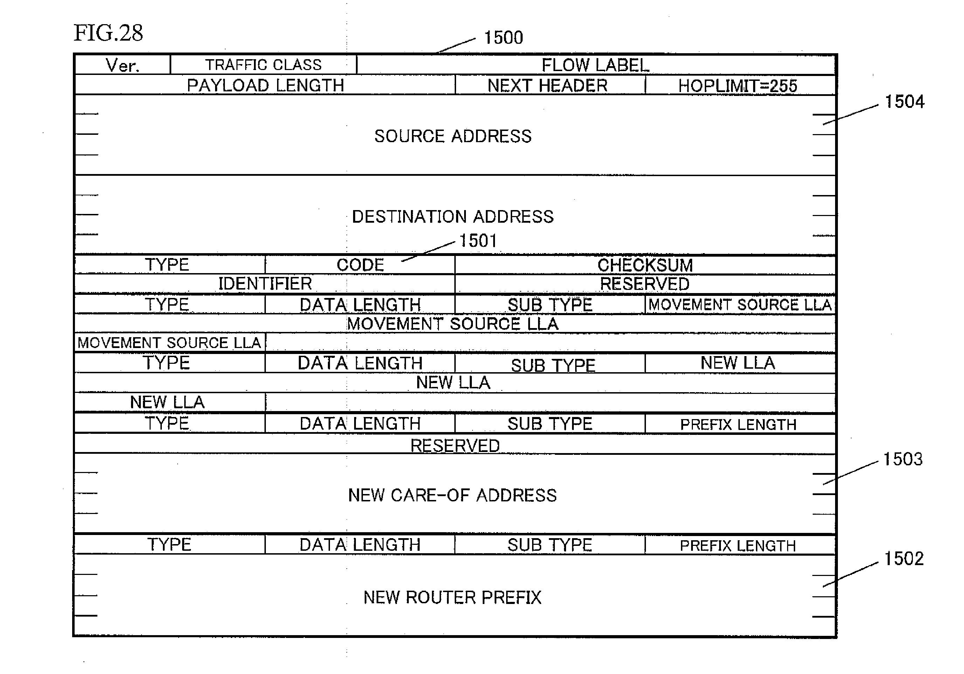

In Fig. 9, first, when the mobile IP/Fast Mobile IP processing part 25 receives the proxy router advertisement message 1500 as a reply to the router solicitation for proxy 1400 (step S701), it verifies the transmission source address (S702). A format of the proxy router advertisement message 1500 is shown in Fig. 28. The new care-of address field 1503 is the care-of address of the local network to which the mobile communication apparatus 20 is newly connected, the new router prefix field 1502 indicates the address of the newly connected local network, and a code field 1501 indicates that information on the requested access router apparatus could not be found or that information on the access router apparatus could be found but the apparatus does not comply with Fast Mobile IP.

When the transmission source address 1504 is the address of the home agent, the mobile IP/Fast Mobile IP processing part 25, verifies whether information on the movement-destination access router apparatus 100d is included in the message, and whether the movement-destination access router apparatus 100d complies with Fast Mobile IP (step S703). For example, it is verified whether the IP address of the movement-destination access router apparatus 100d or a network prefix managed by the movement-destination access router apparatus 100d is written in the new router prefix field 1502. If this is the case, the fast binding update message 1600 in which the address of the movement-destination access router apparatus is set in a replacement care-of address field 1601 is sent to the home agent apparatus (step S704).

On the other hand, if this is not the case, the mobile IP/Fast Mobile IP processing part 25 sends the buffering request message 2000 to the home agent apparatus (step S705).

In the step S702, when the transmission source address 1504 is the pre-movement source access router apparatus 100c, the Fast Mobile IP compliance determining part 27 verifies whether the movement-destination access router apparatus 100d complies with Fast Mobile IP or not (step S706). The verification is done by referring to the code field 1501 of the proxy router advertisement message 1500 or a handover capability option 2401 which is not shown.

When it is verified that the movement-destination access router apparatus 100d does not comply with Fast Mobile IP, the Fast Mobile IP control part 26 transmits a fast binding update message 1600 to the pre-movement source access router apparatus 100c, where in the replacement care-of address field 1601 of the message the IP address of the home agent apparatus 40 of the mobile communication apparatus 20 itself (or the home address of the mobile communication apparatus 20 itself) is written (step S707).

On the other hand, if the movement-destination access router apparatus 100d complies with Fast Mobile IP, the Fast Mobile IP control part 26 instructs the mobile IP/Fast Mobile IP processing part 25 to implement the Fast Mobile IP procedure. Specifically, the mobile IP/Fast Mobile IP processing part 25 transmits to the pre-movement source access router apparatus 100c the fast binding update message 1600 in whose substituted care-of address field 1601 is written the IP address of the movement-destination access router apparatus 100d (or the IP address of a mobile communication apparatus 20 which can be used when connecting to the movement-destination access router apparatus 100d) as the IP address of the access router apparatus to be the handover destination (step S708).

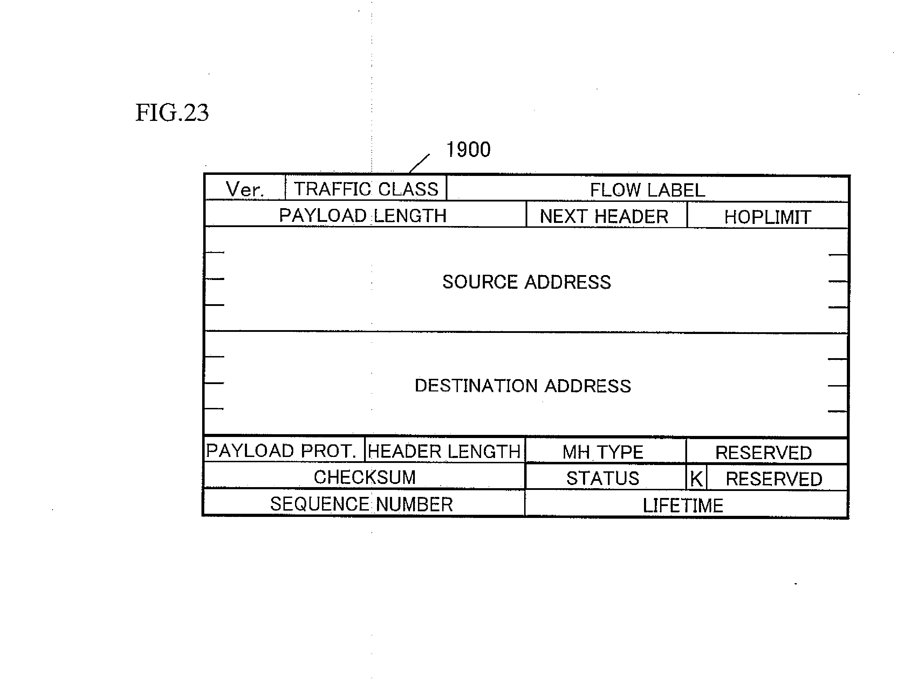

Next, as a reply to the fast binding update message 1600, when a fast binding acknowledgement message 1900 written in Fig. 23 is received (stepS709), the mobile IP/Fast Mobile IP processing part 25 instructs the lower layer processing part 21 or 22 to start handover processing, and the lower layer processing part 21 and/or 22 executes the handover processing. Further, when the handover in the lower layer is completed, a connection processes such as acquiring a new care-of address in the IP processing part 23 is carried out (step S710). After acquiring the new care-of address, the mobile IP/Fast Mobile IP processing part performs a binding update processing with respect to the home agent apparatus 40 based on the standard mobile IP procedure (step S711).

In the case that a fast binding update message 1600 containing the IP address of the home agent apparatus 40 (or the home address of the mobile communication apparatus 20 itself) has previously been sent, packets stored in the home agent apparatus 40 are forwarded after the binding update processing (step S711) is finished, and the IP processing part 23 receives the packets (step S712).

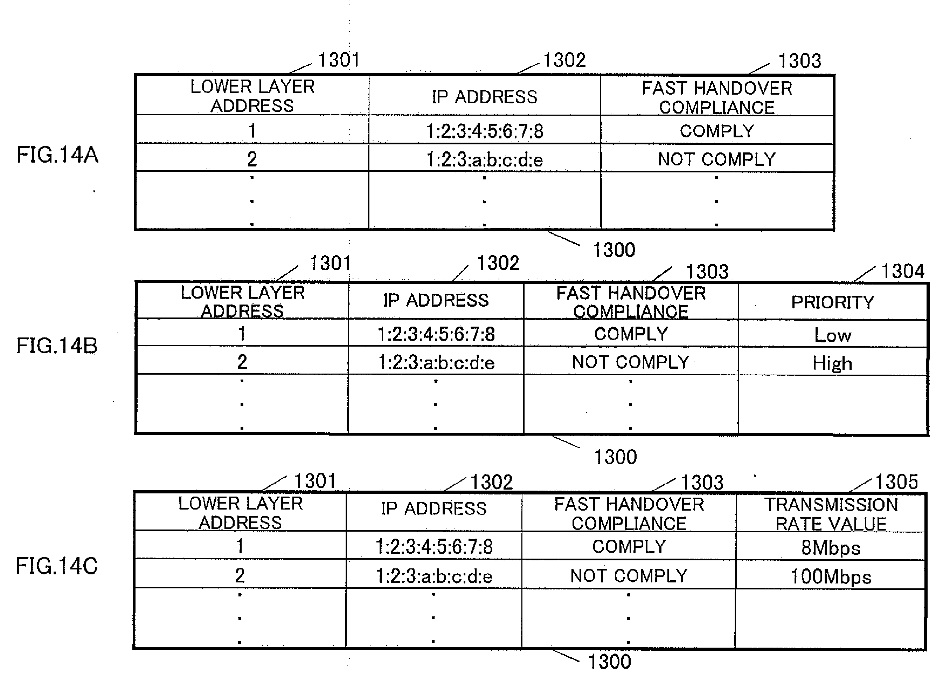

In the case that the standard Fast Mobile IP procedure has been previously executed, namely, the fast binding update message 1600 in which the IP address of the movement-destination access router apparatus 100d is written has been sent, stored packets are forwarded after the handover processing (step S710) is completed, and the IP processing part 23 receives the packets. The mobile communication apparatus 20 may acquire identifier tags of plural access router apparatuses 100 and acquire information on them. Specifically, the access router searching part 28 acquires information used for selecting priority 1304, transmission rate 1305 or the like in an access router information list 1300 such as shown in Fig. 14B or Fig. 14C by requesting it from the home agent apparatus 40 , the access router information server apparatus 60 or the access router apparatus 100, at which information on the access router is acquired. Then, the access router searching part 28 makes a comparison according to the request from the upper layer where there are applications, and can select one of the access router apparatuses 100 of the prospective movement-destination. For example, in the case that the transmission rate value 1305 shown in Fig. 14C is acquired together with other information on the movement-destination access router and there is transmission and reception of large data, the access router apparatus 100 with the lower layer address "2", whose transmission rate value 1305 is 100Mbps, is decided as the movement-destination access router, thereby realizing a smooth handover. However, since the movement-destination access router apparatus 100d decided here does not comply with Fast Mobile IP, it is necessary to apply the procedure as described above.

As described above, according to the mobile communication apparatus of the invention, in a network environment in which the access router apparatuses which comply with Fast Mobile IP and the access router apparatuses which do not comply with Fast Mobile IP are intermixed, even when the movement-destination access router does not comply with Fast Mobile IP, packet loss can be eliminated in the same way as in Fast Mobile IP, and forwarding efficiency during the handover in the mobile communication system can be improved by forwarding mail to the home agent apparatus.

Next, the configuration and operation of the home agent apparatus 40 according to the invention will be explained with reference to the drawings.

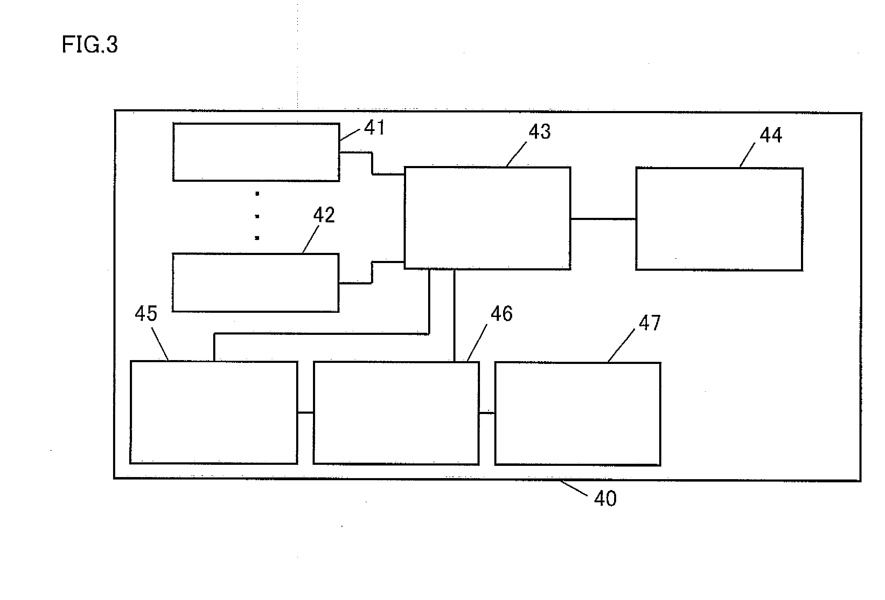

Fig. 3 is a configuration diagram of the home agent apparatus 40 according to the invention.
In Fig. 3, lower layer processing parts 41, 42 perform processes such as modulation and demodulation or the access control, an IP processing part 43 performs a packet forwarding and the like using the Internet protocol (IP), and an upper layer processing part 44 performs the control of applications and the management of sessions at layers higher than the IP layer. A mobile IP/Fast Mobile IP processing part 45 implements procedures of the standard mobile IP and Fast Mobile IP, a buffer memory 47 temporarily stores packets addressed to the mobile communication apparatus 20 and received by the home agent apparatus 40, and a buffer management part 46 manages input and output of the buffer.

Concerning the lower layer processing parts 41, 42, it is sufficient to have at least one part, and it is not always necessary to have two or more.

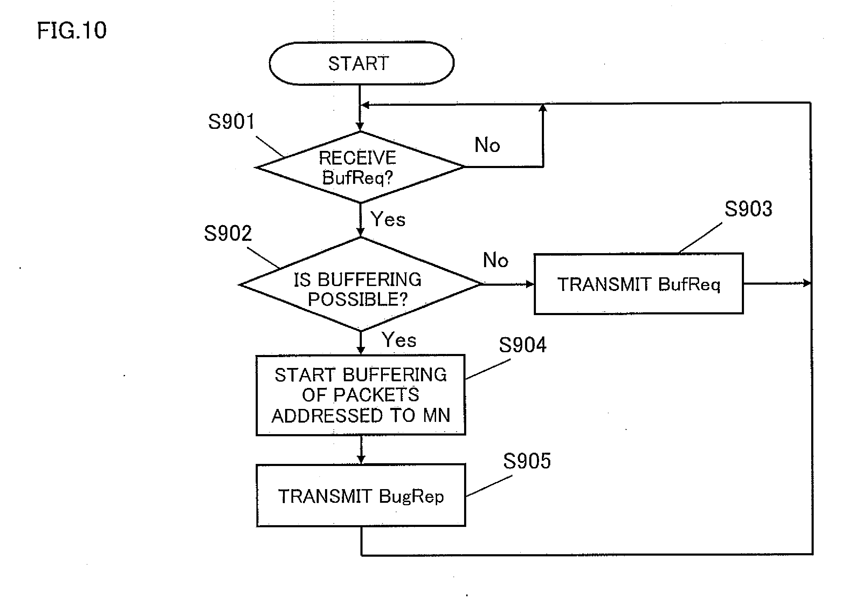

Operations of the home agent apparatus 40 constituted as above will be explained in detail with reference to operation flow charts shown in Fig. 10 to Fig. 12.

When the home agent apparatus 40 receives a predetermined message from the mobile communication apparatus 20 or the access router apparatus 100, the home agent apparatus 40 starts the indicated operation. Hereinafter, operations for each of the messages received will be explained.

Fig. 10 is the operation flow chart showing operations when the home agent apparatus 40 has received the buffering request message 2000 transmitted by the mobile communication apparatus 20.

The mobile IP/Fast Mobile IP processing part 45 checks whether the buffering request message 2000 has been received or not through the lower layer processing parts 41, 42 and the IP processing part 43 (step S901), and if it has been received, the mobile IP/Fast Mobile IP processing part 45 makes a notification to the buffer management part 46.

Next, the buffer management part 46 verifies the status of the buffer memory 47 and determines whether the buffering is possible (step S902).

If the buffer management part 46 determines that the buffering is impossible for a reason such as limited buffer capacity, this is indicated in a status field 2101 of a buffering reply message 2100 which is sent to the mobile communication apparatus 20 (step S903).

In the case that the buffering is determined to be possible, from that time onward, the IP processing part 43 forwards packets addressed to the mobile communication apparatus 20 to the buffer management part 46 and the buffer management part 46 stores the packets in the buffer 47 (step S904). In addition, the buffering reply message 2100 in which the start of buffering is indicated in the status field 2101 is transmitted to the mobile communication apparatus 20 (step S905). After that, the processing returns to the step S901.

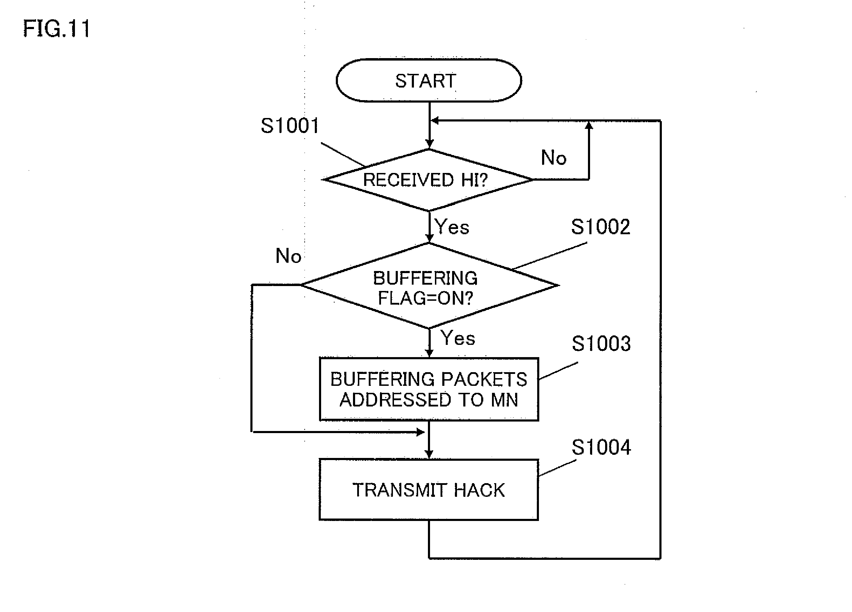

Fig. 11 is an operation flow chart showing operations when the home agent apparatus 40 has received a handover initiate message 1700 transmitted by the access router device.

When the mobile IP/Fast Mobile IP processing part 45 receives the handover initiate message 1700 through the lower layer processing parts 41, 42 and the IP processing part 43 (step S1001), the mobile IP/Fast Mobile IP processing part 45 verifies that there is a U-flag 1703 which requests the buffering (step S1002). In the case there is a buffering request, from that time onward, the IP processing part 43 forwards packets addressed to the mobile communication apparatus 20 to the buffer management part 46, and the buffer management part 46 starts the process of storing the packets in the buffer 47 (step S1003). Then, the buffer management part 46 sends a handover acknowledgement message 1800 to the mobile communication apparatus 20, in which a status code indicating the start of buffering is written in a code field 1801 (step S1004). In the case that the buffering is judged to be impossible in the step S1003, this is indicated in the code field 1801 of a handover acknowledgement message 1800 and sent to the mobile communication apparatus 20 (step S1004).

In the step S1002, if there is no buffering request, the buffer management part 46 transmits a handover acknowledgement message 1800 in which a prescribed status code is written in a code field 1801, to the mobile communication apparatus 20 (step S1004).

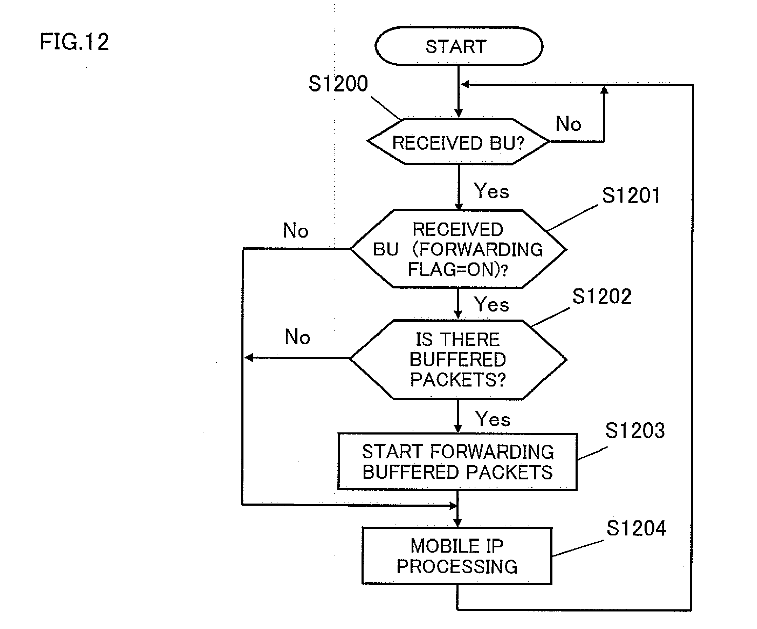

Fig. 12 is the operation flow chart showing operations when the home agent apparatus 40 receives a binding update message 2200 transmitted by the mobile communication apparatus 20.

When the mobile IP/Fast Mobile IP processing part 45, receives the binding update message 2200 through the lower layer processing part 41 or 42 and the IP processing part 43 (step S1200), the mobile IP/Fast Mobile IP processing part 45 checks whether a T-flag 2202 requesting the forwarding of buffered packets is set (step S1201). In the case that the T-flag 2202 is not set, the mobile IP/Fast Mobile IP processing part 45 processes the binding update message 2200 in accordance with the standard mobile IP procedure (step S1204). After that, the processing returns to the step S1200.

In the case that the T-flag 2202 is set, the mobile IP/Fast Mobile IP processing part 45 makes a notification to the buffer management part 46 and the buffer management part 46 checks whether packets addressed to the mobile communication apparatus 20 are stored in the buffer 47 (step S1202). If so, the packets are forwarded to the IP processing part 43 to be transmitted to the mobile communication apparatus 20 (step S1203).

Further, the mobile IP/Fast Mobile IP processing part 45 processes the binding update message 2200 in accordance with the standard mobile IP procedure (step S1204).

Even when there are no stored packets, the mobile IP/Fast Mobile IP processing part 45 further processes a binding update message 2200 in accordance with the standard mobile IP procedure(step S1204).

Even in the case that there is no T-flag, by receiving the binding update message 2200 from the mobile communication apparatus 20 for which buffering is being carried out, it can be verified that a new communication route has been secured, and therefore, buffered packets can be forwarded.

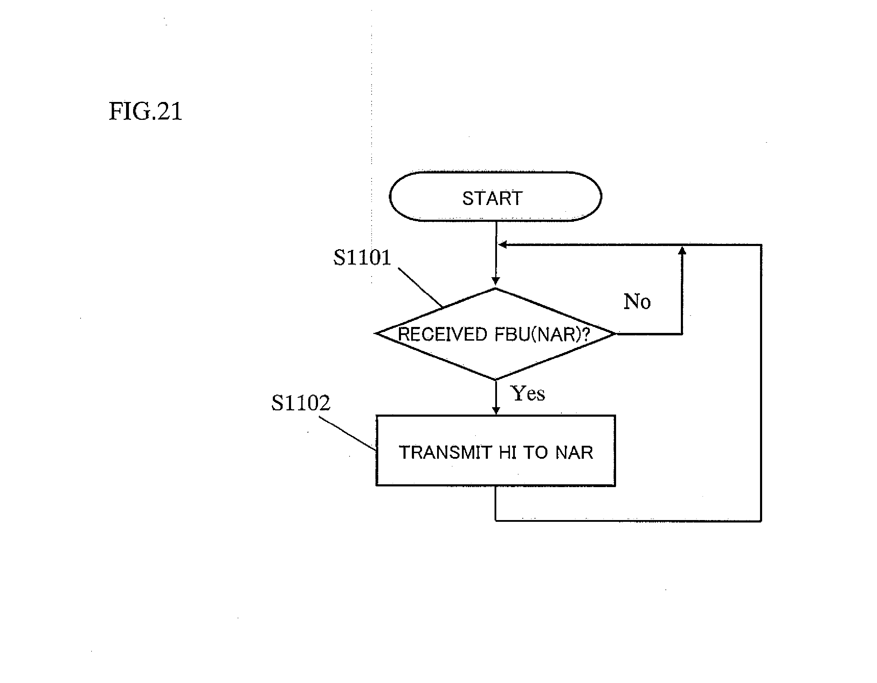

Fig. 21 is an operation flow chart showing operations when the home agent apparatus 40 receives the fast binding update message 1600 transmitted by the mobile communication apparatus 20.

When the IP processing part 43 receives the fast binding update message 1600 through the lower layer processing part 41 or 42 (step S1101), the IP processing part 43 forwards it to the mobile IP/Fast Mobile IP processing part 45. Then, the mobile IP/Fast Mobile IP processing part 45 sends the handover initiate message 1700 to the IP address written in the replacement care-of address field 1601 in the fast binding update message 1600, that is, the IP address of the movement-destination access router apparatus 100d (step S1102). After that, the standard Fast Mobile IP procedure is performed.

Operations when the home agent apparatus 40 receives the router solicitation for proxy 1400 transmitted by the mobile communication apparatus 20 are as follows. When the IP processing part 43 of the home agent apparatus 40 receives the router solicitation for proxy 1400 through the lower layer processing part 41 or 42, the IP processing part 43 forwards the message to the mobile IP/Fast Mobile IP processing part 45, and the mobile IP/Fast Mobile IP processing part 45 asks the access router information server 60 for the identifier tag of the movement-destination access router apparatus 100d written in the router solicitation for proxy 1400, for example, the lower layer address, and thereby acquires information on the corresponding access router apparatus 100d.

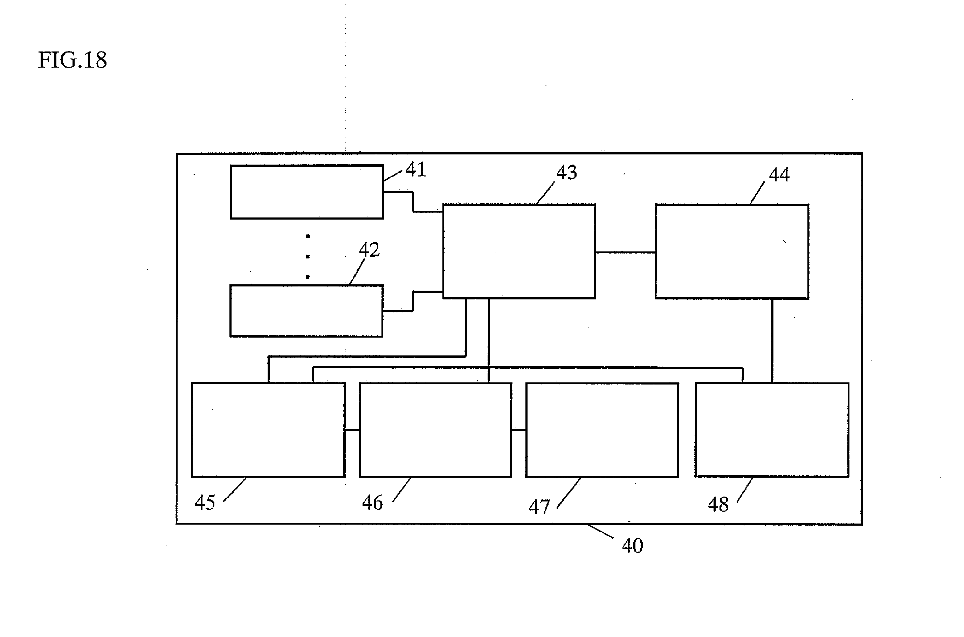

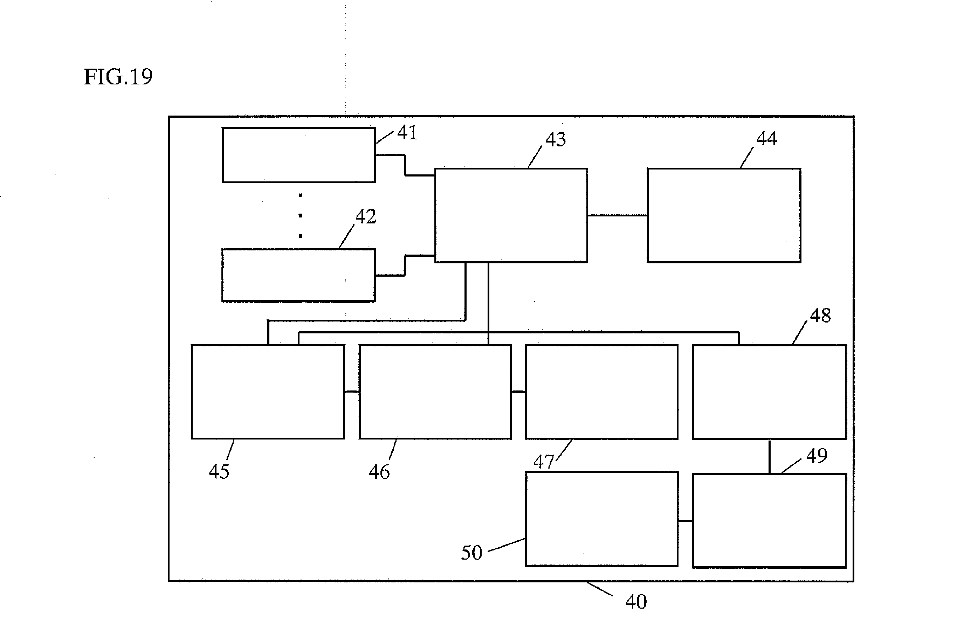

Other configurations of the home agent apparatus 40 according to the present invention are shown in Fig. 18 and Fig. 19.

In Fig. 18, the configuration including a movement-destination access router searching part 48 which acquires information on the movement-destination access router apparatus 100d of the movement-destination sub-network of the mobile communication apparatus 20 is different from the configuration shown in Fig. 3.

The Fig. 19 configuration including an access router information list 50 in which information on the access router apparatuses is stored and an access router information searching part 49 is different from the configuration shown in Fig. 18. The access router information searching part 49 connects with the movement-destination access router searching part 48, searches for information on the access router apparatus in question from the access router information list 50, and forwards the information to the movement-destination access router searching part 48.

Operations of the home agent apparatus 40 constituted as above are same as Fig. 10 to Fig. 12, and Fig. 21, but operations when the router solicitation for proxy 1400 transmitted by the mobile communication apparatus 20 is received are different from these.

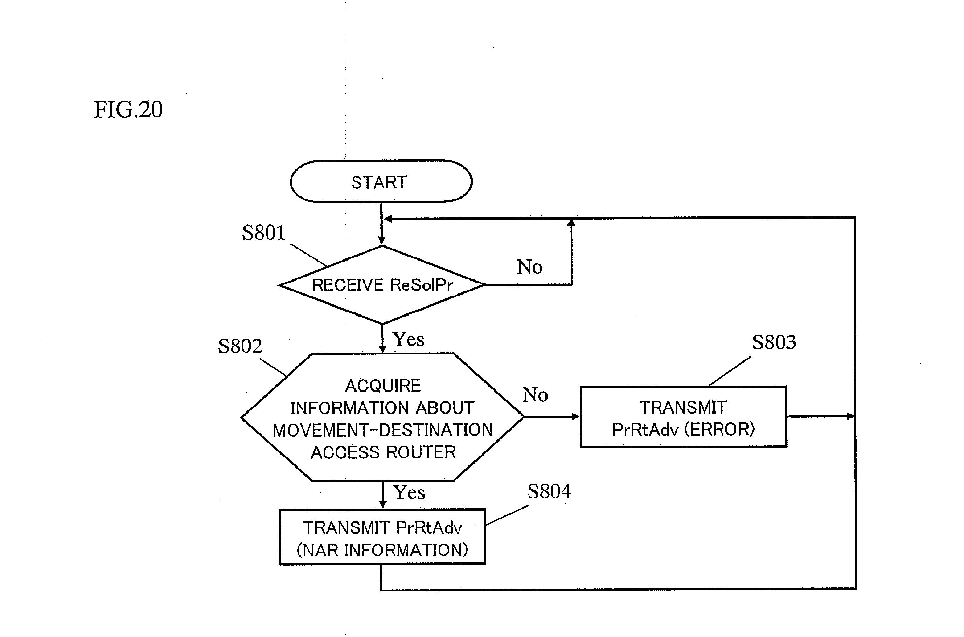

Fig. 20 is a flow chart showing the operations when this home agent apparatus 40 receives the router solicitation for proxy 1400 transmitted by the mobile communication apparatus 20.

Specifically, when the IP processing part 43 receives the router solicitation for proxy 1400 through the lower layer processing part 41 or 42 (step S801), the IP processing part 43 forwards the message to the mobile IP/Fast Mobile IP processing part 45 and the mobile IP/Fast Mobile IP processing part 4 5 notifies the movement-destination access router searching part 48 of the identifier tag of the movement-destination access router apparatus 100d, for example the lower layer address, written in the router solicitation for proxy 1400, to request a search for information on the corresponding access router apparatus 100d.

In the home agent apparatus 40 including the configuration shown in Fig. 18, the movement-destination access router searching part 48 transmits a message through the upper layer processing part 44 and the IP processing part 43 requesting information on the access router apparatus 100d in question from the access router information server apparatus 60, and forwards the information on the access router apparatus 100d that is obtained as the reply to the message to the mobile IP/Fast Mobile IP processing part 45 (step S802).

The movement-destination access router searching part 48 in the home agent apparatus 40 which has the configuration of Fig. 19 sends a search request including the identifier tag of the access router apparatus 100d to the access router information searching part 49, and the access router information searching part 49 searches for relevant information from the access router information list 50 (step S802).

The mobile IP/Fast Mobile IP processing part 45 sends the proxy router advertisement message 1500, in which the obtained information is written, to the mobile communication apparatus 20 (step S804). In the case that information on the corresponding access router apparatus 100d could not be obtained, a proxy router advertisement message 1500 in which presence of an error is indicated in the code field 1501 is transmitted to the mobile communication apparatus 20 (step S803).

Next, the configuration and operations of the access router information server information 60 according to the invention will be explained with reference to the drawings.

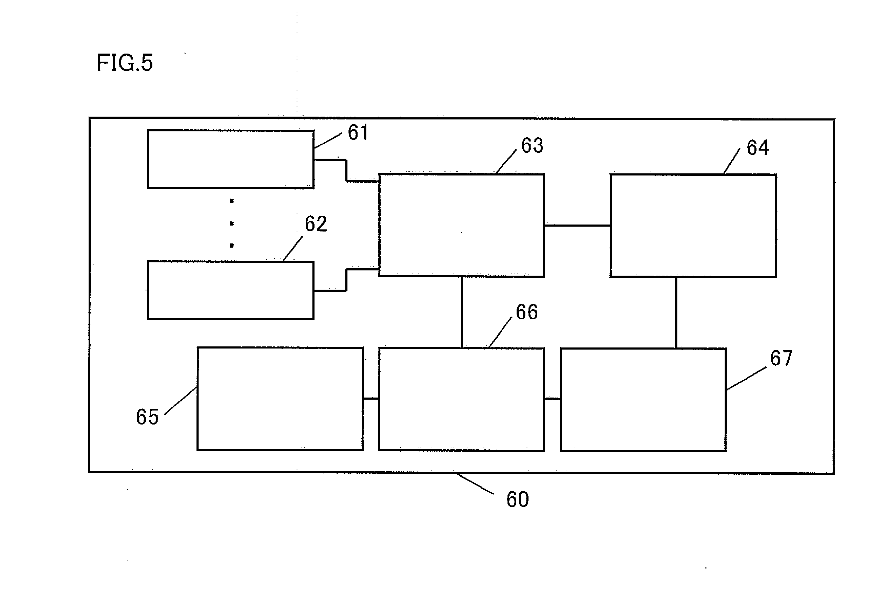

Fig. 5 is a configuration diagram of the access router information server information 60 according to the invention. In Fig. 5, lower layer processing parts 61, 62 perform processes such as modulation, demodulation, and access control, an IP processing part 63 performs a packet forwarding and the like using the Internet protocol (IP), and an upper layer processing part 64 performs the control of applications and management of sessions at layers higher than the IP layer. Additionally, an access router information list 65 keeps information of the access router apparatuses, an access router information searching part 66 searches for information on access routers from the access router information list, and an access router information notifying part 67 notifies the mobile communication apparatus of the search result of the access router information searching part 66. It is sufficient to have one of the lower layerprocessing parts 61, 62, and it is not always necessary to have two or more.

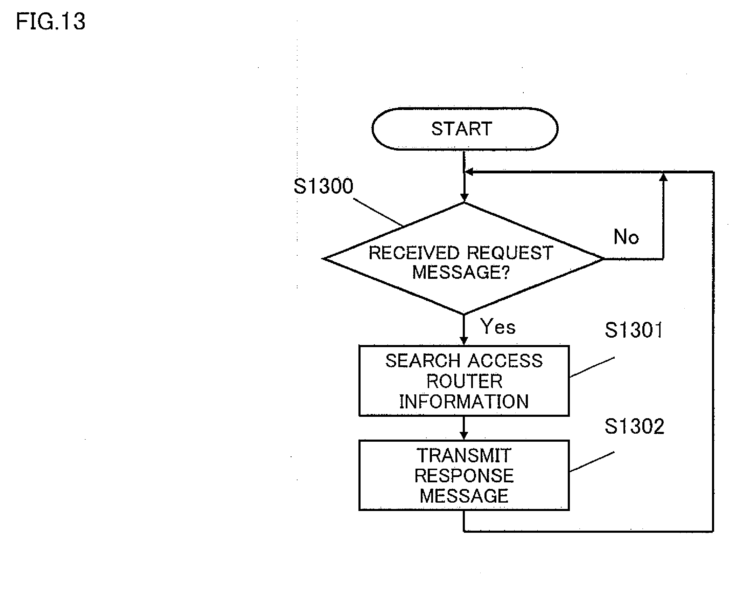

Operations of the access router information server apparatus 60 constituted as above will be explained in detail using the operation flow chart shown in Fig. 13.

When the access router information server apparatus 60 receives a prescribed message from the mobile communication apparatus 20, the home agent apparatus 40 or the access router apparatus 100, it starts the indicated operations. The respective operations carried out in response to each message received are as follows.

Fig. 13 is an operation flow chart showing the case when a request message 2500 transmitted by the mobile communication apparatus 20, the home agent apparatus 40 or the access router apparatus 100 is received.

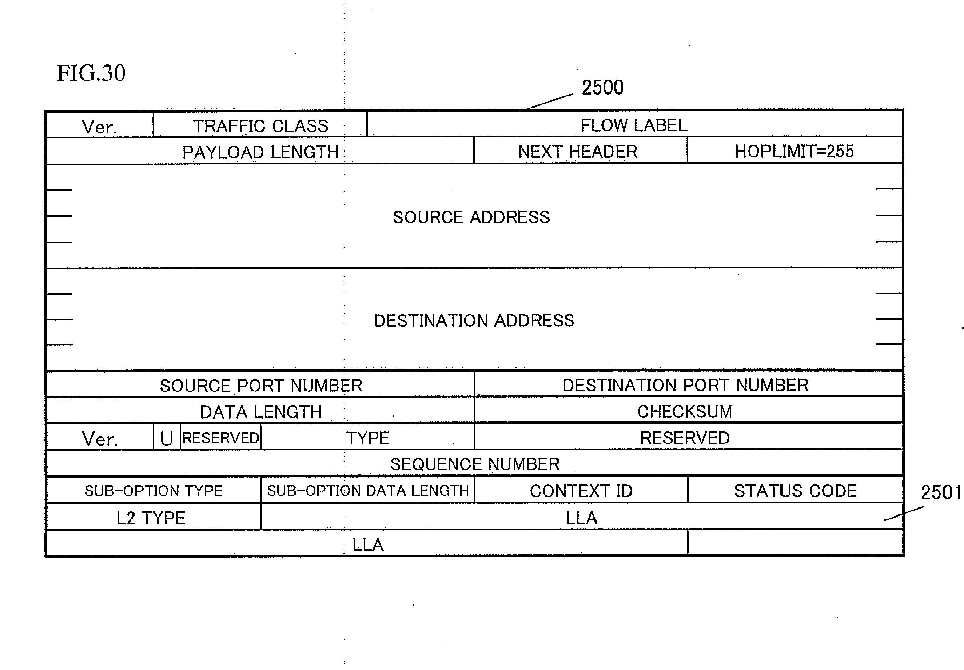

First, when the access router information searching part 66 receives the request message 2500 through the lower layer processing parts 61, 62, the IP processing part 63, or the upper layer processing part 64(step S1300), the access router information searching part 66 searches for the indicated information in the access router information list 65 (step S1301). A format of the request message 2500 is shown in Fig. 30.

The access router information list has, for example, a configuration shown in Fig. 14A, and includes information showing a lower layer address 1301, an IP address 1302 and a Fast Mobile IP compliance 1303 of the access router apparatuses 100. Further, it can include additional information shown in Fig. 14B, that is, information such as priority value 1304 used when selecting the access router apparatus 100 or a transmission rate 1305 provided by each access router apparatus 100 shown in Fig. 14C.

In search of information, at least the IP address 1302 corresponding to the lower layer address 1301 matching the lower layer address 2501 included in the request message 2500 is searched in the access router information list

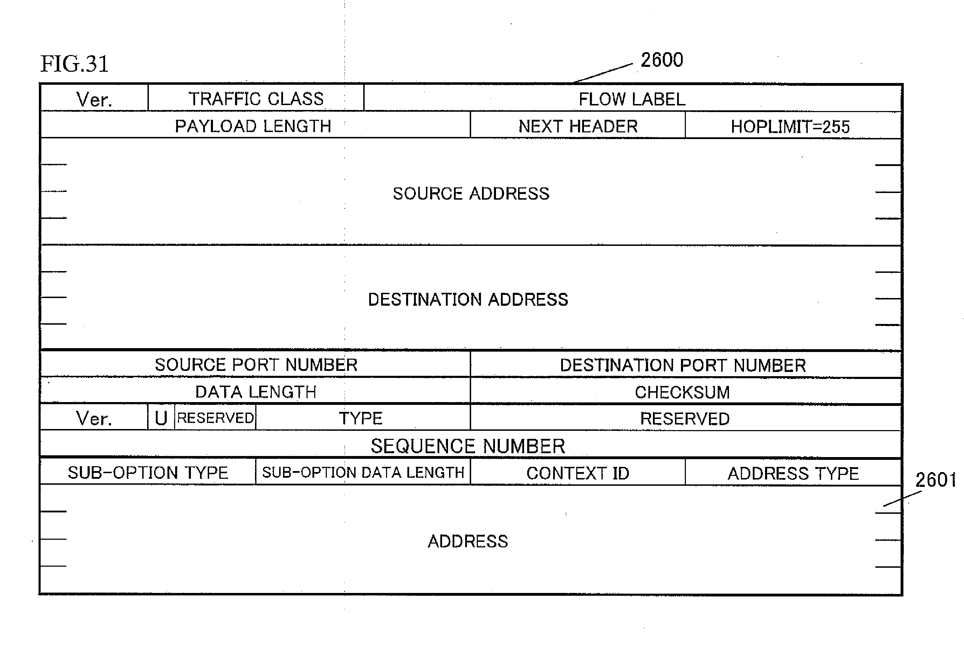

Next, the access router information notifying part 67 transmites a reply message 2600 in which the obtained information is written to the transmission source of the request message (step S1302). A format of the reply message 2600 is shown in Fig. 31. The searched IP address is written in an address field 2601.

When information such as the priority or the transmission rate is made to be included in the reply message, the reply message can include fields in which additional information such as the priority or the transmission rate is included. The packet format is not limited to the above, and may be another format if it has the same effect.

According to the access router information server apparatus of the invention, information on the access router apparatus such as compliance/noncompliance with Fast Mobile IP, the priority value or the transmission rate which may be referred to when selecting the movement-destination access router can be provided. In this way, the mobile communication apparatus receives the information allowing flexible selection of the movement-destination access router apparatus, and therefore, in the mobile communication system according to the invention, the handover which is suitable for the upper layer where there are applications can be realized.

Next, operations when performing the handover with respect to four cases: the access router apparatus is connected to or will be connected to the mobile communication apparatus 20, and complies with, and does not comply with Fast Mobile IP, will be explained below.
(1) A case when performing a handover to the movement-destination access router apparatus which does not comply with Fast Mobile IP when the pre-movement source access router apparatus complies with Fast Mobile IP, not forming part of the present invention.

In this case, the access router apparatuses 100a to 100c connected to the local network 10 can process messages used in the Fast Mobile IP procedure, and also can buffer packets and forward them to the mobile communication apparatus 20. On the other hand, the access router apparatuses 100d to 100f connected to the local network 11 cannot process messages used in the Fast Mobile IP procedure, and cannot buffer packets and forward them to the mobile communication apparatus 20. At this time, the mobilecommunication apparatus 20 moves from the access router router apparatus which belongs to the local network 11.

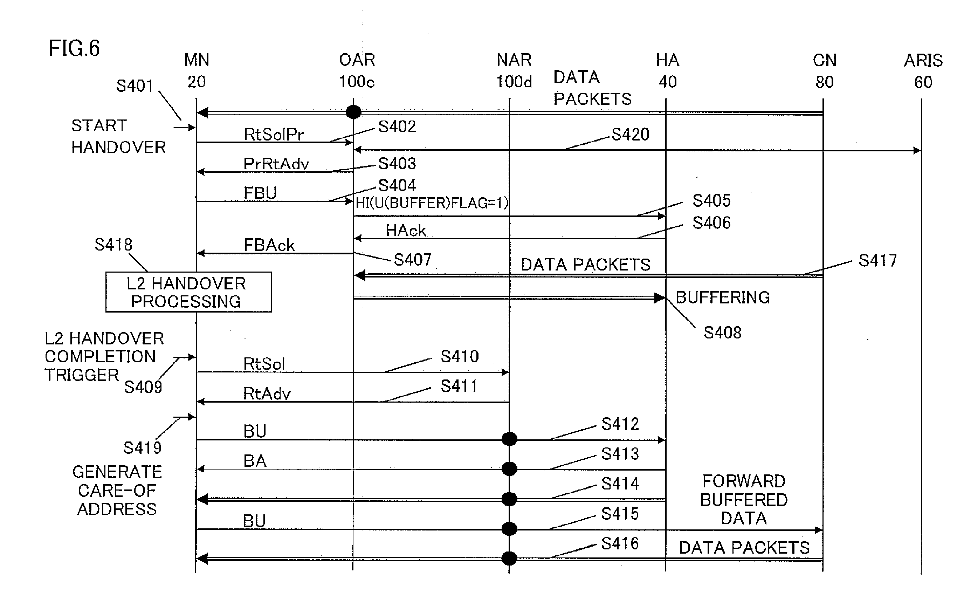

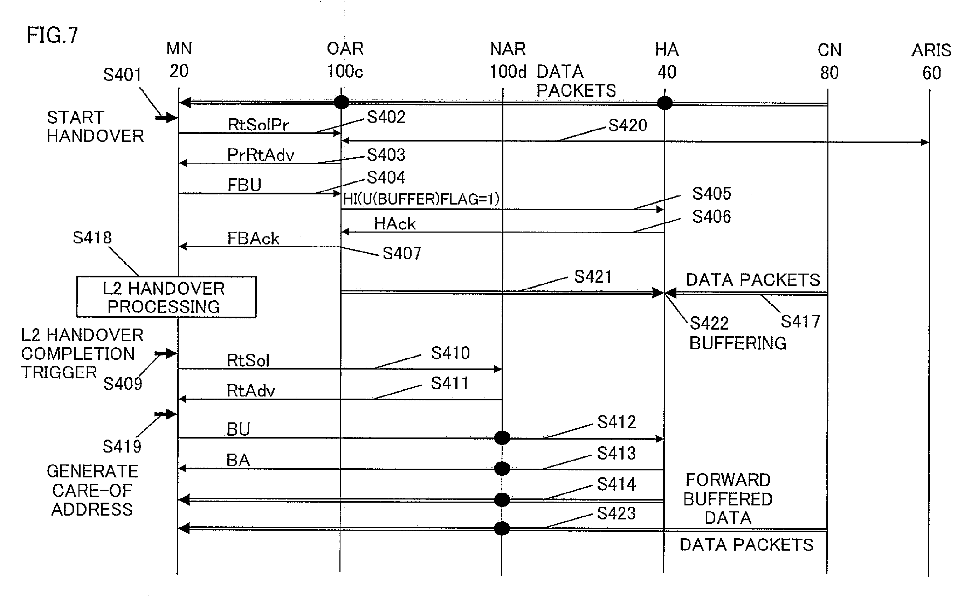

Fig. 6 and Fig. 7 are sequence diagrams showing operations when the mobile communication apparatus 20 moves from the access router apparatus 100c to the access router apparatus 100d in the mobile communication system according to the invention.

Fig. 6 is the sequence diagram in a state that a route from the correspondent node (CN) 80 to the mobile communication apparatus (MN) 20 is optimized, and Fig. 7 is a sequence diagram in a state that the route is not optimized. Note that the route optimization indicates a state in which transmission data from the correspondent node 80 to the mobile communication apparatus 20 is directly transmitted addressed to the current care-of address of the mobile communication apparatus 20 without routing through the home agent apparatus which belongs to the home network of the mobile communication apparatus 20.

First, when the mobile communication apparatus 20 decides to start handover (step S401), it checks whether the access router apparatus 100c complies with Fast Mobile IP.

Next, since the access router apparatus 100c complies with Fast Mobile IP, the mobile communication apparatus 20 sends the router solicitation for proxy (RtSolPr) 1400 to the access router apparatus 100c (step S402). In the case that the mobile communication apparatus 20 can acquire the lower layer address (a MAC address corresponds to this) from the received beacon signals, the address is written in the new LLA field 1401 of the router solicitation for proxy 1400.

After the access router apparatus 100c has received the router solicitation for proxy 1400 from the mobile communication apparatus 20 (step S402), the apparatus searches for information on the movement-destination access router apparatus 100d. At this time, when the lower layer address is included in the router solicitation for proxy 1400, the access router apparatus 100c makes a search based on the lower layer address. The search is performed by referring to the access router information list in which the access router apparatus 100c stores information of the access router apparatuses in the same subnet, or by asking the access router information server apparatus 60 which stores information of the access router apparatuses in the network (step S420).

Hereupon, the configuration of the access router information list according the invention is shown in Fig. 14A, Fig. 14B and Fig. 14C. In Fig. 14A, Fig. 14B and Fig. 14C, the lower layer address 1301 indicates the lower layer address of the corresponding access router apparatus, the IP address 1302 indicates the IP address of the corresponding access router apparatus, and the flag 1303 is a flag indicating whether the corresponding access router apparatus complies with Fast Mobile IP.

The access router information server apparatus 60 stores information on the access router apparatuses, and searches for information such as the IP address of the required access router apparatus, and makes a response. As the result of the search, in the case that information on the access router apparatus in question, namely, the movement-destination access router apparatus 100d, could not be found, or in the case that the information on the movement-destination access router apparatus 100d was found but it was found that the apparatus does not comply with Fast Mobile IP, the access router apparatus 100c transmits to the mobile communication apparatus 20 the code which indicates that information on the movement-destination access router apparatus 100d could not be found or the code which indicates that the information was found but the apparatus does not comply with Fast Mobile IP (step S403). Here, by adding the handover capability option 2401 of the router advertisement message 2400 to the proxy router advertisement message 1500, a message in which the compliance/noncompliance with Fast Mobile IP of the movement-destination access router apparatus 100d which has been discovered is written in the code field 2402 can be transmitted, thereby obtaining an effect equivalent to the above.

Next, the mobile communication apparatus 20 refers to the code field 1501 included in the proxy router advertisement message 1500, and verifies whether information on the access router apparatus 100d can be acquired or not, or whether the access router apparatus 100d complies with Fast Mobile IP or not. In the case that the handover capability option 2401 is added, the mobile communication apparatus 20 refers to the code field 2402 and verifies whether the access router apparatus 100d complies with Fast Mobile IP.

Since the pre-movement source access router apparatus 100c complies with Fast Mobile IP, the mobile communication apparatus 20 sends the fast binding update message (FBU) to the access router apparatus 100c notifying that the mobile communication apparatus 20 has started the procedure of the Fast Mobile IP (step S404).

When the access router apparatus 100c receives the fast binding update message 1600 (step S404), it transmits the handover initiate message (HI) 1700 to the address written in the replacement care-of address field 1601 in the fast binding update message 1600; that is, to the home agent apparatus 40 (step S405).

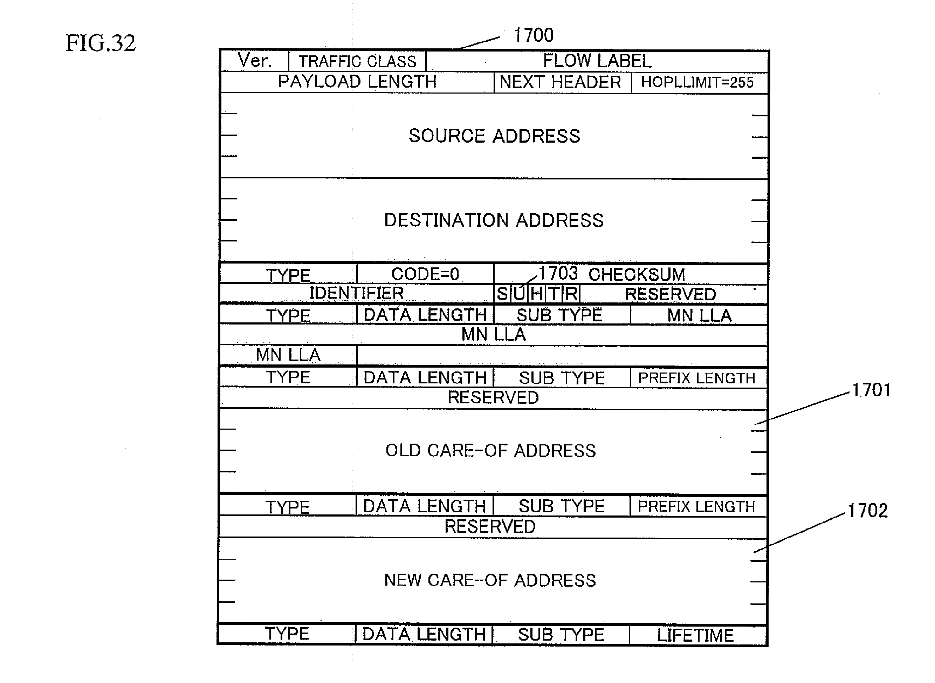

A packet format of the handover initiate message 1700 is shown in Fig. 32. Here, the current care-of address is written in the old care-of address field 1701 in the handover initiate message 1700, and the U-flag 1703 which instructs the home agent apparatus 40 to buffer packets is set. If the buffering is not requested, the U-flag 1703 does not have to be set.

The home agent apparatus 40, after receiving the handover initiate message 1700 from the access router apparatus 100c, verifies that the home address corresponding to the care-of address written in the old care-of address field 1701 of the handover initiate message 1700, namely the home address of the mobile communication apparatus 20 exists in the binding cache.

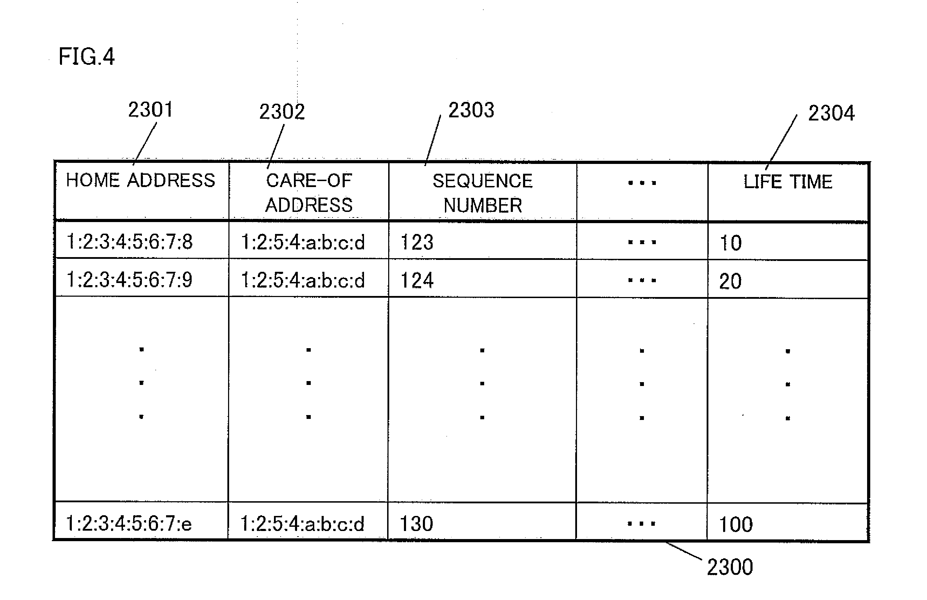

Fig. 4 is a chart showing a data structure of the binding cache. Home address 2301 indicates home addresses of nodes managed by the home agent apparatus 40, and Care-of address 2302 indicates addresses of the nodes in the network outside the subnetwork to which the home agent apparatus belongs, a sequence number 2303 has the highest sequence number among the binding update messages which have been previously received, and a lifetime 2304 indicates the length of time that nodes registered in the binding cache can be used.

In the embodiment, the home agent apparatus 40 verifies whether the address of the old care-of address field 1701 exists in the home address 2301. In the case that the U-flag 1703 which instructs buffering in the handover initiate message 1700 is set, the buffering of packets addressed to the care-of address and to the home address of the mobile communication apparatus 20 is started.

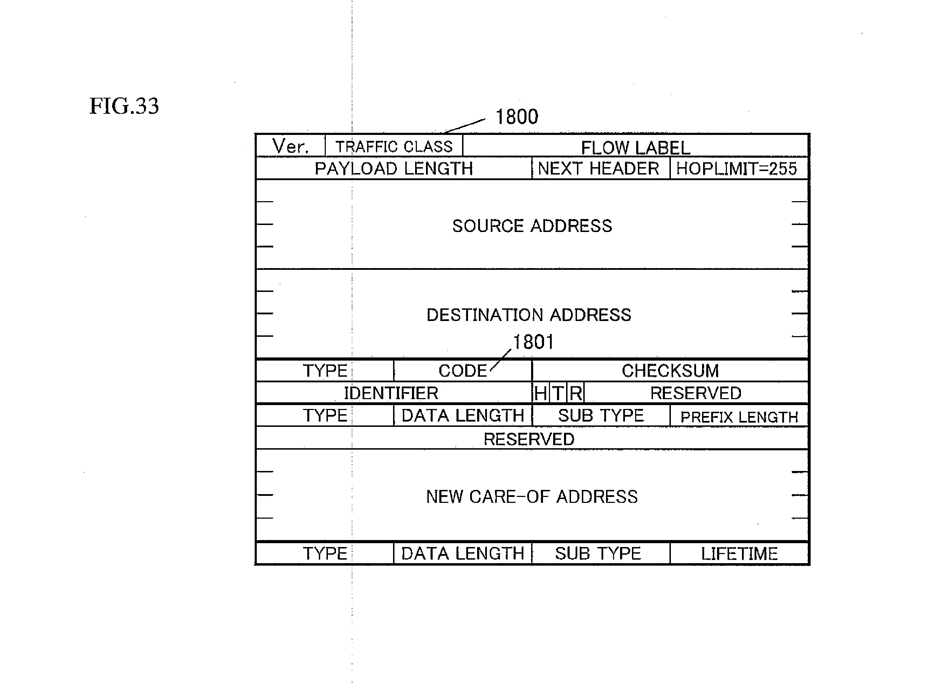

Next, the home agent apparatus 40 sends the handover acknowledgement (HACK) message 1800 indicating the start of the handover process to the access router apparatus 100c (step S406). A format of the handover acknowledgement message 1800 is shown in Fig. 33.

The access router apparatus 100c, after receiving the handover acknowledgement message 1800, transmits a fast binding acknowledgement message (FBACK) 1900 to the mobile communication apparatus 20 (step S407).

Since the communication route from the correspondent node 80 to the mobile communication apparatus 20 is optimized, data packets are transmitted from the correspondent node 80 not to the home agent apparatus 40, but rather to the access router apparatus 100c directly (step S417).

The access router apparatus 100c has received the fast binding update message 1600 from the mobile communication apparatus 20, and therefore the access router apparatus 100c forwards the received data packets addressed to the mobile communication apparatus 20 to the home agent apparatus 40. Since the home agent apparatus 40 is required to perform buffering by the handover initiate message 1700, the forwarded data packets addressed to the mobile communication apparatus 20 are buffered (step S408).

Next, the mobile communication apparatus 20, after receiving the fast binding acknowledgement message 1900 from the access router apparatus 100c, performs the handover process in the lower layer (step S418), and when the handover process in the lower layer is completed, issues a trigger indicating that the handover process in the lower layer has been completed to the IP layer (step S409). Then after the handover process in the lower layer is completed, the mobile communication apparatus 20 sends a router solicitation message (RtSol) to the movement-destination access router apparatus 100d (step S410).

The access router apparatus 100d, after receiving the router solicitationmessage, sends a router advertisement message 2400 including at least its own subnet prefix to the mobile communication apparatus 20 (step S411).

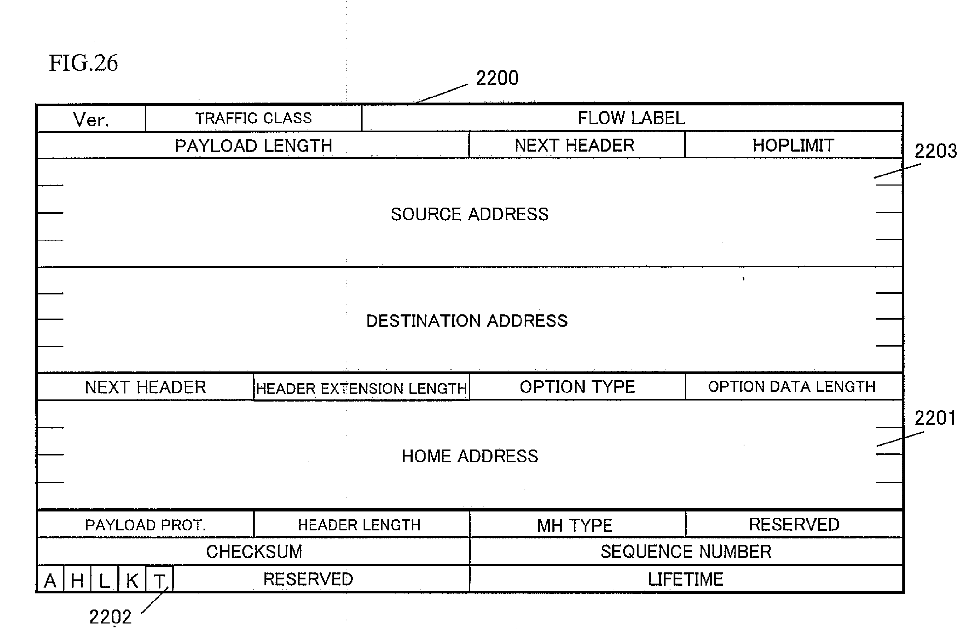

After the mobile communication apparatus 20 receives the router advertisement message 2400 from the access router apparatus 100d, the mobile communication apparatus 20 generates a care-of address (step S419). After that, the mobile communication apparatus 20 sends a binding update message (BU) 2200 including the generated care-of address and its own home address to the home agent apparatus 40 through the access router apparatus 100d, thus transmitting the care-of address of the movement-destination sub-network (step S412). A format of the binding update message 2200 is shown in Fig. 26. The home address of the mobile communication apparatus 20 is written in a home address field 2201 and the care-of address is written in a source address field 2203.

Next, the home agent apparatus 40, after receiving the binding update message 2200 (step S412), updates a binding cache 2300, and starts transmitting the buffered packets to the new care-of address (step S414). At the same time, the home agent apparatus 40 sends the binding acknowledgement message (BA) to the mobile communication apparatus 20 through the access router apparatus 100d (step S413).

Receiving the binding acknowledgement message from the home agent apparatus 40 (step S413), the mobile communication apparatus 20 verifies that the location registration has been completed.

Furthermore, the mobile communication apparatus 20 sends the binding update message 2200 to the correspondent node 80 in accordance with the standard mobile IP procedure (step S415). The correspondent node 80, after receiving the binding update message 2200, updates the stored binding cache 2300 and performs direct communications with the mobile communication apparatus 20 (step S416).

The above is an operation sequence when the communication route between the mobile communication apparatus 20 and the correspondent node 80 is optimized.

Next, operations when the communication route is not optimized will be explained with reference to the sequence diagram of Fig. 7. The case is different from the case in which the route optimization is performed only with regard to the point that packets addressed to the mobile communication apparatus are routed through the home agent apparatus 40, and with regard to actions arising from this point. Here, only the points in which the operation is different will be explained.

As shown in Fig. 7, when data packets are transmitted from the correspondent node 80 to the home agent apparatus 40 (step S417), the home agent apparatus 40 buffers the packets addressed to the care-of address of the mobile communication apparatus 20 forwarded by the access router apparatus 100c because the home agent apparatus 40 is requested in the handover initiate message to perform buffering from the access router apparatus 100c (step S421). In addition, the home agent apparatus 40 also buffers packets addressed to the home address which is associated with the CoA in the binding cache (step S422).
After the mobile communication apparatus 20 has finished an L2 handover, the home agent apparatus 40 receives the binding update message 2200 (step S412), and then updates the binding cache 2300 and start transmitting the buffered packets to the new care-of address (step S414).

Even when the mobile communication apparatus 20 receives the binding acknowledgement message from the home agent apparatus 40 (step S413) and verifies that the location registration has been finished, the mobile communication apparatus 20 does not send the binding update message 2200 to the correspondent node 80, and therefore, packets addressed to the mobile communication apparatus 20 are all transmitted through the home agent (step S423).

Note that the packet format is not limited to that applied in the above explanation and may be other formats as long as the same effect can be obtained.
(2) A case when performing a handover to the movement-destination access router apparatus which complies with Fast Mobile IP when the pre-movement source access router apparatus does not comply with Fast Mobile IP

Also in this case, the access router apparatuses 100a to 100c connected to the local network 10 can process messages used in the Fast Mobile IP procedure and can buffer packets and forward them to the mobile communication apparatus 20. On the other hand, the access router apparatuses 100d to 100f connected to the local network 11 cannot process messages used in the Fast Mobile IP procedure, and cannot buffer packets and forward them to the mobile communication apparatus 20. At this time, the mobile communication apparatus 20 moves from the access router apparatus 100d which belongs to the local network 11 to the access router apparatus 100c which belongs to the local network 10.

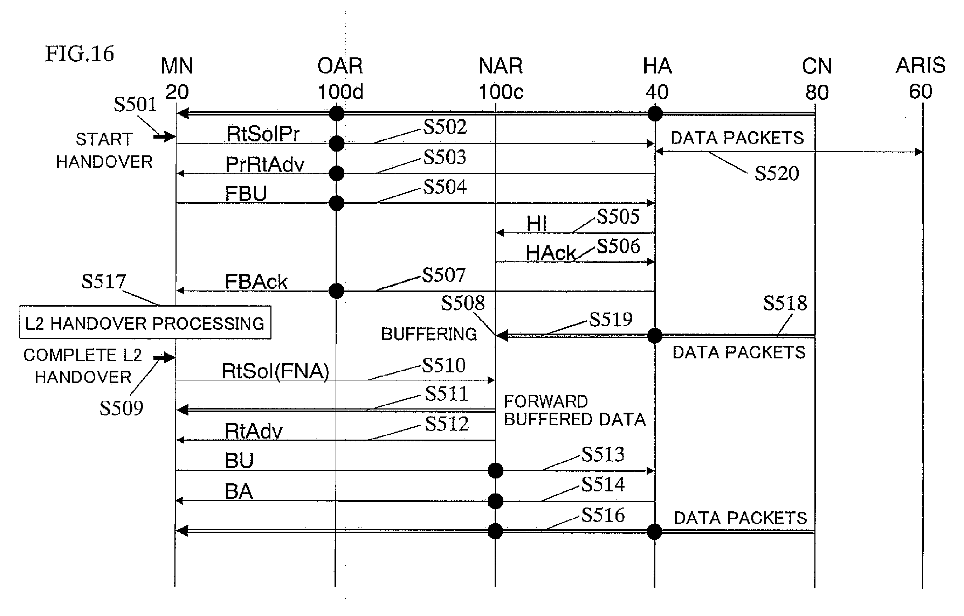

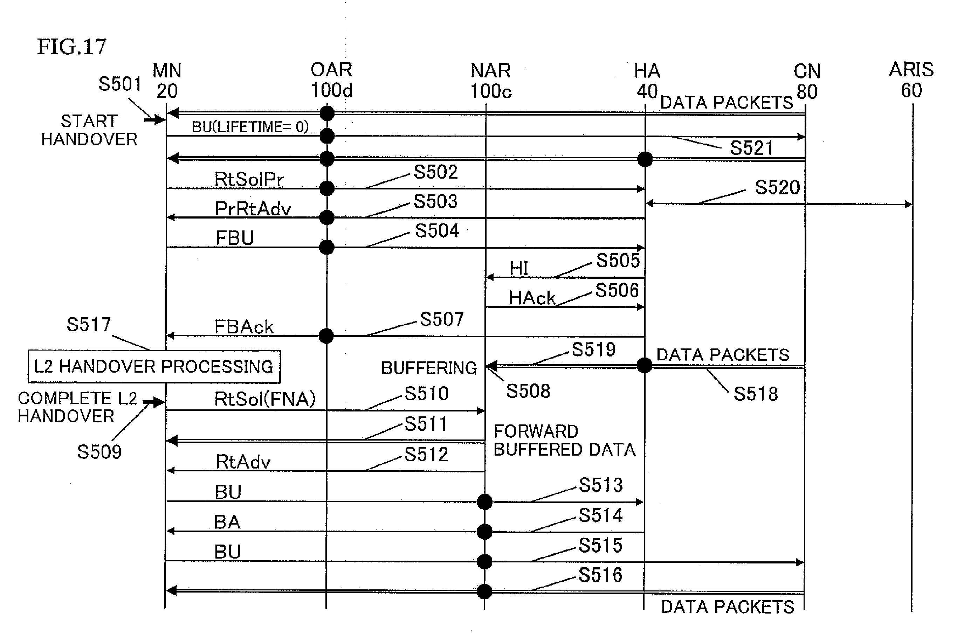

Fig. 16 and Fig. 17 are sequence diagrams showing operations when the mobile communication apparatus 20 moves from the access router apparatus 100d to the access router apparatus 100c in the mobile communication system according to the invention.

Fig. 16 shows operations in a state that the communication route from the correspondent node 80 to the mobile communication apparatus 20 is not optimized, and data packets addressed to the mobile communication apparatus 20 are transmitted to the home address. The home agent apparatus 40 forwards the data packets to the access router 100d towhich it is currently connected, and the access router 100d further forwards them to the mobile communication apparatus 20.

On the other hand, Fig. 17 shows operations in a state that the communication route from the correspondent node 80 to the mobile communication apparatus 20 is optimized, and data packets to the mobile communication apparatus 20 are directly transmitted to the access router apparatus 100d and then are forwarded to the mobile communication apparatus 20.

First, operations when the route optimization is not used will be explained with reference to Fig. 16.
When the mobile communication apparatus 20 detects a handover in the same way as the case (1) (step S501), it checks whether the lower layer address of the access router apparatus 100c can be obtained from the received beacon signals. Further, the mobile communication apparatus 20 determines whether the access router apparatus 100d complies with Fast Mobile IP. Since it is determined that the access router apparatus 100d does not comply with Fast Mobile IP, the mobile communication apparatus 20 sends the router solicitation for proxy(RtSolPr) 1400 to the home agent apparatus 40 through the access router apparatus 100d (step S502). In the case that the lower layer address can be acquired from the received beacon signals, the lower layer address is written in the new LLA field 1401 of the router solicitation for proxy 1400.

Next, the home agent apparatus 40, after receiving the router solicitation for proxy 1400 from the mobile communication apparatus 20, searches for information concerning the movement-destination access router apparatus 100c. At this time, when the lower layer address is included in the router solicitation for proxy 1400, the search is performed based on the lower layer address. The search is performed by searching in the access router information list stored by the home agent apparatus itself, in which information of the access router apparatuses is stored, or by inquiring of the access router information server apparatus 60 in which information of the access router apparatuses in the network is stored (step S520).

As the result of the search, when an entry corresponding to the lower layer address can be found and it is determined that there is compliance with Fast Mobile IP, the home agent apparatus 40 sends the proxy router advertisement message (PrRtAdv) 1500 in whose new router prefix field 1502 is written the IP address obtained from information on the access router apparatus 100c which corresponds to the lower layer address (step S503).

Next, the mobile communication apparatus 20 receives the proxy router advertisement message 1500 through the access router apparatus 100d to acquire the IP address written in the new router prefix field 1502 as the information on the movement-destination access router apparatus 100c. Subsequently, the mobile communication apparatus 20 sends the fast binding update message (FBU) 1600 to the home agent apparatus 40 through the access router apparatus 100d (step S504). At this time, a global address of the home agent apparatus 40 is written as the destination address of the fast binding update message 1600. The IP address included in the information on the movement-destination access router apparatus 100c which has previously been acquired is written in the replacement care-of address field 1601 of the fast binding update message 1600.

The acquirement of information on the movement-destination access router apparatus can be directly performed by the mobile communication apparatus 20. In that case, the mobile communication apparatus 20 does not execute the processes of the step S502 and the step S503, the process of the step S520 is initiated by the mobile communication apparatus 20 itself and is executed through interaction between the mobile communication apparatus and the access router information server apparatus 60, and performs the process of the step S504 based on the obtained information.

Next, the home agent apparatus 40, after receiving the fast binding update message 1600, transmits the handover initiate message (HI) 1700 to the address indicated in the replacement care-of address field 1601 of the fast binding update message 1600, that is, to the movement-destination access router apparatus 100c (step S505). At this time, the current care-of address of the mobile communication apparatus 20 is written in the old care-of address field 1701 of the hand over initiate message 1700, and the U-flag 1703 for instructing the access router apparatus 100c to buffer packets is set. Note that the home agent apparatus 40 updates the binding cache also at this time.

Next, the movement-destination access router apparatus 100c, after receiving the handover initiate message 1700 from the home agent apparatus 40, starts to buffer packets addressed to the care-of address of the mobile communication apparatus 20 received from that time, because the U-flag 1703 for instructing the buffering is set in the handover initiate message 1700. Specifically, when the home agent apparatus 40 receives data packets addressed to the home address of the mobile communication apparatus 20 (step S518) and forwards them to the access router apparatus 100c (step S519), the access router apparatus 100c verifies that the packets are addressed to the mobile communication apparatus 20 and performs buffering (step S508).

At that time, the access router apparatus 100c sends the handover acknowledgement message (HACK) 1900 indicating that the handover process has started to the home agent apparatus 40 (step S506).

Next, the home agent apparatus 40, after receiving the handover acknowledgement message 1800, sends the fast binding acknowledgement message (FBACK) 1900 to the mobile communication apparatus 20 through the pre-movement source access router apparatus 100d (step S507). Meanwhile, packets addressed to the home address of the mobile communication apparatus 20 and sent from the correspondent node 80 are buffered by the access router apparatus 100c as described above (step S508).

Next, after the mobile communication apparatus 20 receives the fast binding acknowledgement message 1800 from the access router apparatus 100d (step S507), the mobile communication apparatus 20 performs the handover process in the lower layer (step S517).

After the handover process in the lower layer is finished (step S509), the mobile communication apparatus 20 transmits the router solicitation message (RtSol) to the movement-destination access router apparatus 100c (step S510).

Next, after the movement-destination access router apparatus 100c receives the router solicitation message, transmits the buffered packets to the mobile communication apparatus 20 (step S511).

The movement-destination access router apparatus 100c sends to the mobile communication apparatus 20 a router advertisement message which includes at least the subnet prefix of the movement-destination access router apparatus 100c itself (step S512).

Next, after the mobile communication apparatus 20 receives the router advertisement message from the movement-destination access router apparatus 100c, the mobile communication apparatus 20 transmits a binding update message BU 2200 which includes the care-of address and the home address of the mobile communication apparatus 20 itself to the home agent apparatus 40 through the access router apparatus 100c (step S513).

Next, after the home agent apparatus 40 receives the binding update message 2200 (step S513), it updates the binding cache 2300. After that, the home agent apparatus 40 sends a binding acknowledgement message BA to the mobile communication apparatus 20 (step S514).

Next, the mobile communication apparatus 20 receives the binding acknowledgement message from the home agent apparatus 40 through the access router apparatus 100c (step S514) and recognizes that the location registration has been completed.

From that time onward, packets addressed to the mobile communication apparatus are forwarded via the home agent apparatus 40 (step S523).

The above is the operation sequence in the case that the communication route is not optimized between the mobile communication apparatus 20 and the correspondent node CN.

Next, operations in the case that the route optimization is performed will be explained with reference to Fig. 17. First, after the start of the handover is decided, a binding update message whose lifetime is set to "0" is sent to the correspondent node (step S521). In this way, the route optimization is cancelled, and packets addressed to the mobile communication apparatus are routed via the home agent. As a result, loss of data packets from the correspondent node 80 to the mobile communication apparatus 20 in the handover can be prevented.

After that, the processes in the same way as when route optimization is not performed are performed (step S502 to S514).

Next, after the mobile communication apparatus 20 has received the binding acknowledgement message (S514) from the home agent apparatus, the mobile communication apparatus 20 sends the binding update message 2200 to the correspondent node 80 in accordance with the mobile IP procedure (step S515).

After the correspondent node 80 receives the binding update message 2200, it updates the stored binding cache 2300 and performs the route optimization. In this way, the correspondent node 80 directly sends communications to the care-of address, not to the home address of the mobile communication apparatus 20, from that time (step S516). Note that the above packet format is not limited to this and may be other formats as long as the same effect can be obtained.
(3) The case of performing a handover to a movement-destination access router apparatus which complies with Fast Mobile IP when the pre-movement source access router apparatus complies with Fast Mobile IP, not forming part of the present invention.

In this case, the access router apparatuses 100a to 100c connected to the local network 10 and the access router apparatuses 100d to 100f connected to the local network 11 can process messages used in the Fast Mobile IP procedure, and can buffer packets and forward them to the mobile communication apparatus 20. At this time, the mobile communication apparatus 20 moves from the access router 100c which belongs to the local network 10 to the access router apparatus 100d which belongs to the local network 11.

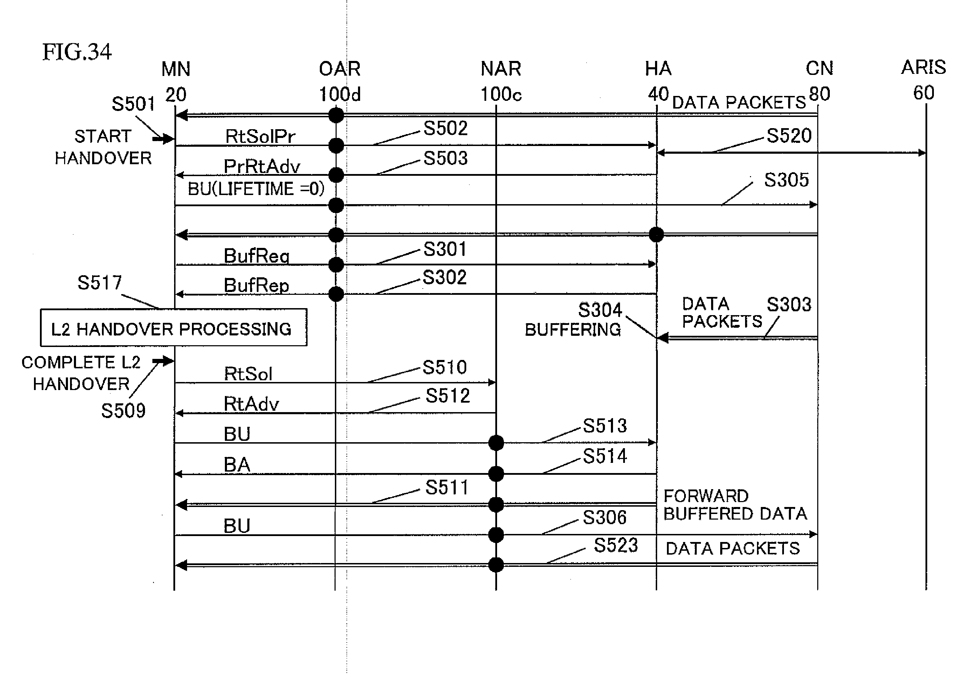

The sequence diagram of this case is same as Fig. 34 of the conventional art, but it is different from the conventional art in that when the mobile communication apparatus 20 decides to start handover, the mobile communication apparatus 20 verifies whether the access router apparatus 100c complies with Fast Mobile IP (step S401).

The mobile communication apparatus 20 determines that the access router apparatus 100c complies with Fast Mobile IP and transmits the router solicitation for proxy(RtSolPr) 1400 to the access router apparatus 100c (step S402).

The subsequent processes are same as the conventional example.
(4) The case of handover to a movement-destination access router apparatus which does not comply with Fast Mobile IP when the pre-movement source access router apparatus does not comply with Fast Mobile IP, not forming part of the present invention.

In this case, the access router apparatuses 100a to 100c connected to the local network 10 and the access router apparatuses 100d to 100f connected to the local network 11 cannot process messages used in the Fast Mobile IP procedure and cannot buffer packets or forward them to the mobile communication apparatus 20. At this time, the mobile communication apparatus 20 moves from the access router apparatus 100d which belongs to the local network 11 to the access router apparatus 100c which belongs to the local network 10.

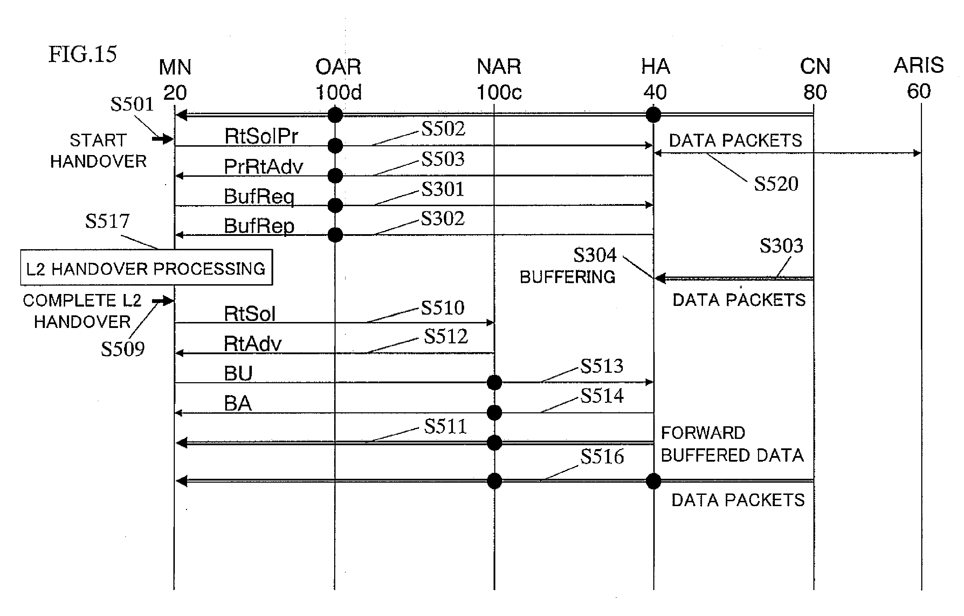

Fig. 15 shows operations in a state that the communication route from the correspondent node 80 to the mobile communication apparatus 20 is not optimized, and data packets addressed to the mobile communication apparatus 20 are transmitted to the home address. The home agent apparatus 40 forwards the data packets to an access router apparatus 100d to which it is currently connected, then, the access router apparatus 100d further forwards them to the mobile communication apparatus 20.

On the other hand, Fig. 34 shows operations in a state that the communication route from the correspondent node 80 to the mobile communication apparatus 20 is optimized, and data packets addressed to the mobile communication apparatus 20 are directly transmitted to the access router apparatus 100d which then forwards them to the mobile communication apparatus 20.

First, operations in the case the route optimization is not applied will be explained with reference to Fig. 15.

In Fig. 15, the processes of the mobile communication apparatus 20, from decision to start handover (step S501) to reception of the proxy router advertisement message 1500 (step S503) to acquisition of the IP address written in the new router prefix field 1502 as information on the movement-destination access router apparatus 100c, are the same as operations in the case that the route optimization is not applied in the case 2.

Next, the mobile communication apparatus 20 sends the buffering request message 2000 to the home agent apparatus 40 through the access router apparatus 100d (step S301). At this time, the home address of the mobile communication apparatus 20 is written as the home address of the buffering request message 2000.

Next, after the home agent 40 receives the buffering request message 2000, it verifies that the mobile communication apparatus 20 which is the source of the message is registered in the binding cache. If this is verified, the home agent apparatus 40 transmits the buffering reply message 2101 notifying that the request for processing has been received to the mobile communication apparatus 20 (step S302).

Next, the home agent apparatus 40 receives data packets addressed to the home address of the mobile communication apparatus 20 (step S303) and starts to buffer those data packets (step S304).

Next, after the mobile communication apparatus 20, after receives the buffering reply message 2101 from the access router apparatus 100d (step S302), the mobile communication apparatus 20 performs the handover process in the lower layer (step S517).

After the mobile communication apparatus 20 finishes the handover process in the lower layer (step S509), it transmits the router solicitation message (RtSol) to the movement-destination access router apparatus 100c (step S510).

Next, when the movement-destination access router apparatus 100c receives the router solicitation message, it sends a router advertisement message including at least its own subnet prefix to the mobile communication apparatus 20 (step S512).

After the mobile communication apparatus 20 receives the router advertisement message from the movement-destination access router apparatus 100c, it next sends the binding update message BU2200 including the care-of address and the home address of the mobile communication apparatus 20 itself to the home agent apparatus 40 through the access router apparatus 100c (step S513).

After the home agent apparatus 40 receives the binding update message 2200 (step S513), it updates the binding cache 2300. After that, the apparatus sends the binding acknowledgement message BA to the mobile communication apparatus 20 (step S514). The home agent apparatus 40 also transmits the buffered data packets addressed to the mobile communication apparatus 20 to the mobile communication apparatus 20 through the access router apparatus 100c (step S511).

Next, the mobile communication apparatus 20 receives the binding acknowledgement message from the home agent apparatus 40 through the access router apparatus 100c (step S514) and recognizes that the location registration has been completed.

From that time onward, packets addressed to the mobile communication apparatus are forwarded via the home agent apparatus 40 (step S516).

The above is the operation sequence in the case that the communication route between the mobile communication apparatus 20 and the correspondent node CN is not optimized.

Next, operations in the case that the route optimization is performed will be explained with reference to Fig. 34.

In Fig. 34, the processes of the mobile communication apparatus 20 from decision to start handover (step S501) to reception of the proxy router advertisement message 1500 (step S503) to acquisition of the IP address written in the new router prefix field 1502 for use as information on the movement-destination access router apparatus 100c are same as operations in the case that the route optimization is not performed.

After the mobile communication apparatus 20 decides to start handover, it sends a binding update message in which "0" is set in the lifetime to the correspondent node 80 (step S305). In this way, the route optimization is cancelled and packets addressed to the mobile communication apparatus 20 are routed via the home agent, and as a result, loss of data packets from the correspondent node 80 to the mobile communication apparatus 20 in the handover can be prevented.

After that, the same processes as the case when the route optimization is not performed are performed (step S310 to S511).

After the mobile communication apparatus 20 receives the binding acknowledgement message from the home agent apparatus (step S514), the mobile communication apparatus 20 sends a binding update message 2200 to the correspondent node 80 in accordance with the mobile IP procedure (step S306).

After the correspondent node 80 receives the binding update message 2200, it updates the binding cache 2300 it is storing and performs the route optimization. In this way, the correspondent node 80 directly sends communications to the care-of address, not to the home address of the mobile communication apparatus 20 (step S523.) Note that the above packet format is not limited to this, and may be other formats if the same effect can be obtained.

As described above, according to the invention, in the network environment in which the access router apparatuses which comply with Fast Mobile IP and the access router apparatuses which do not comply with Fast Mobile IP are intermixed, the mobile communication apparatus determines whether the pre-movement source access router apparatus and the movement-destination access router apparatus comply with Fast Mobile IP, and in the case that the pre-movement source access router does not comply with Fast Mobile IP, the mobile communication apparatus implements the Fast Mobile IP procedure by designating the home agent apparatus as the proxy of the pre-movement source access router apparatus, so that handover with no packet loss can be realized, and when both access router apparatuses comply with Fast Mobile IP, the transmission effect during the handover can be increased because the Fast Mobile IP is performed by both in communication between the two.

### (Embodiment 2)

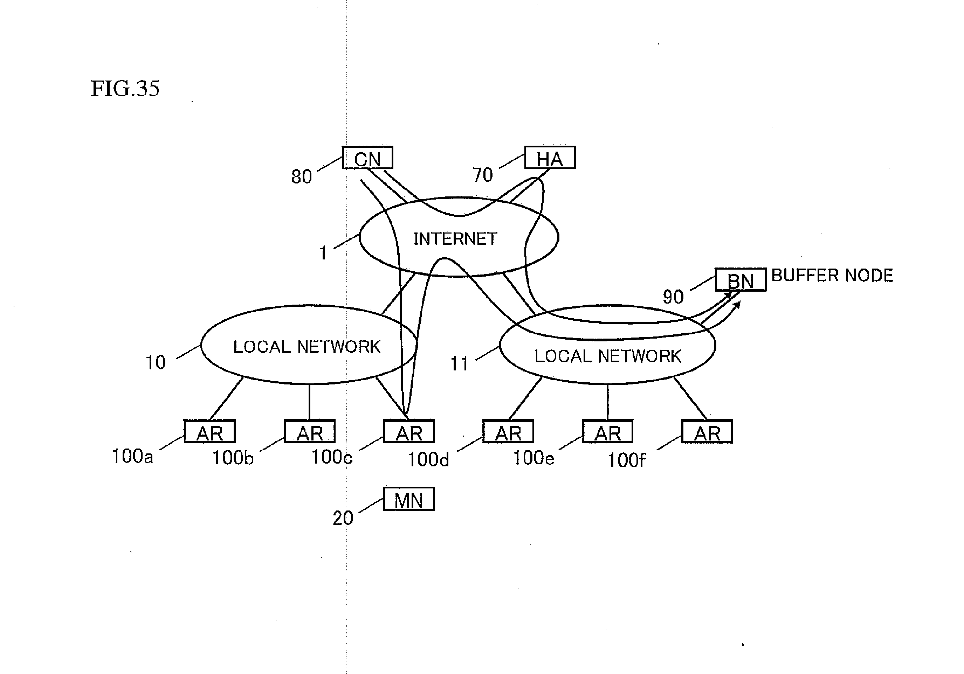

Fig. 35 is a view showing a configuration of a mobile communication system according to the embodiment, which differs from the mobile communication system in the embodiment 1 in that the system has a buffer node (BN) 90 for temporarily storing data.

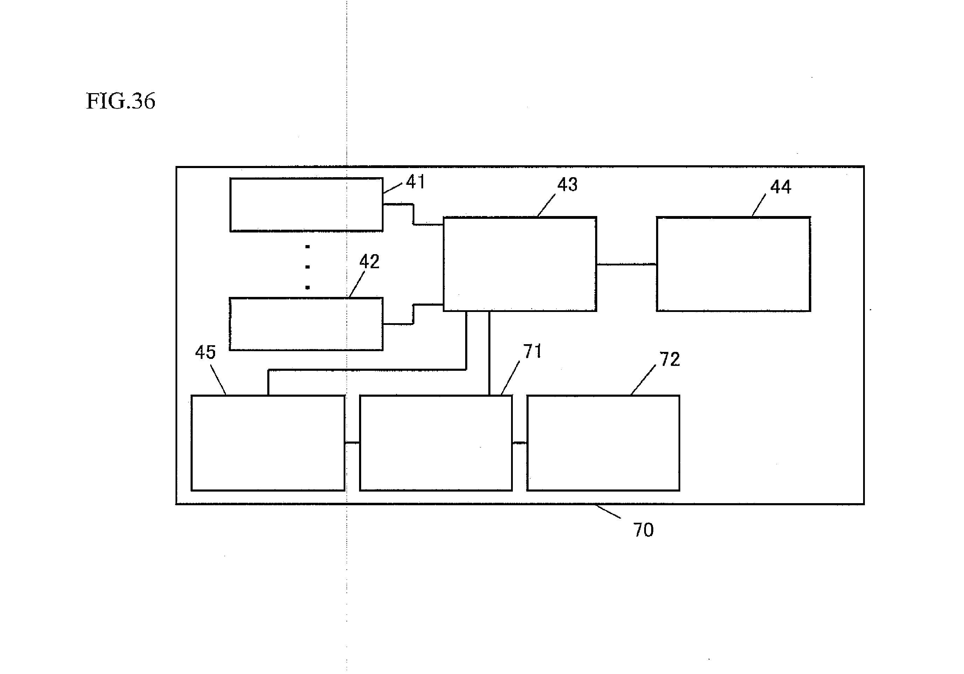

Fig. 36 is a diagram showing a configuration of a home agent apparatus 70.

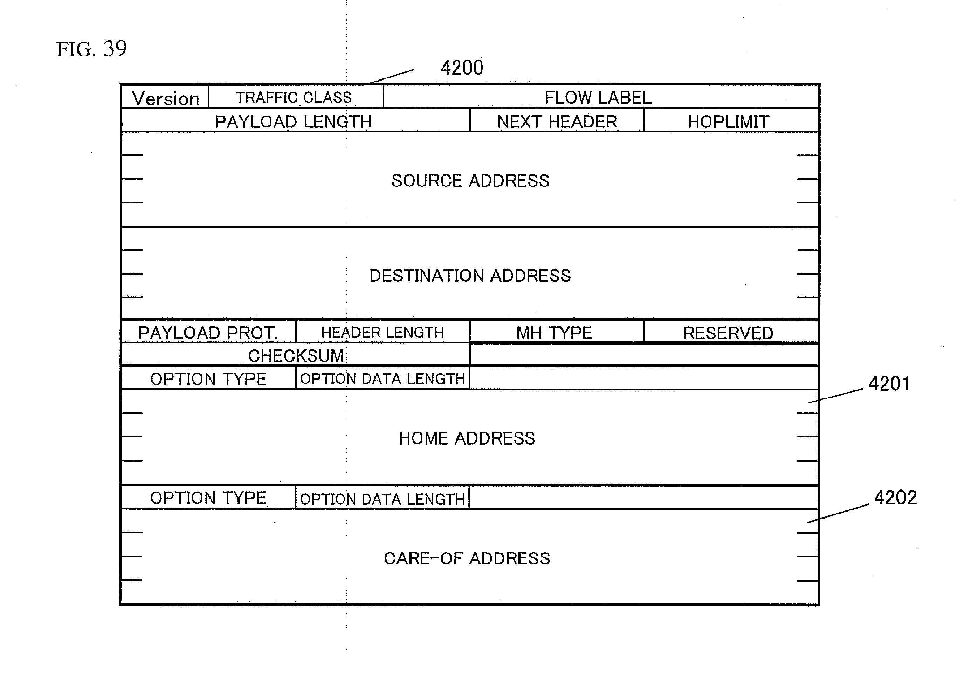

In Fig. 36, a data forwarding part 71 forwards data addressed to the mobile communication apparatus (the mobile node) of a management target to the buffer node 90 which has been previously registered, a message generating part 72 generates a buffer request message which instructs the buffer node 90 to store received data, or a buffer-packet transmission start message which instructs the forwarding of the stored data. The buffer request message is same as the one shown in Fig. 24. A format of the buffer-packet transmission start message is shown in Fig. 39.

In Fig. 39, by setting the MH type to be the value indicating buffer-packet transmission start, the message becomes a buffer-packet transmission start message. Home address 4201 indicates the home address of a mobile communication apparatus 20 and the care-of address 4202 indicates the care-of address of the mobile communication apparatus 20 after movement.

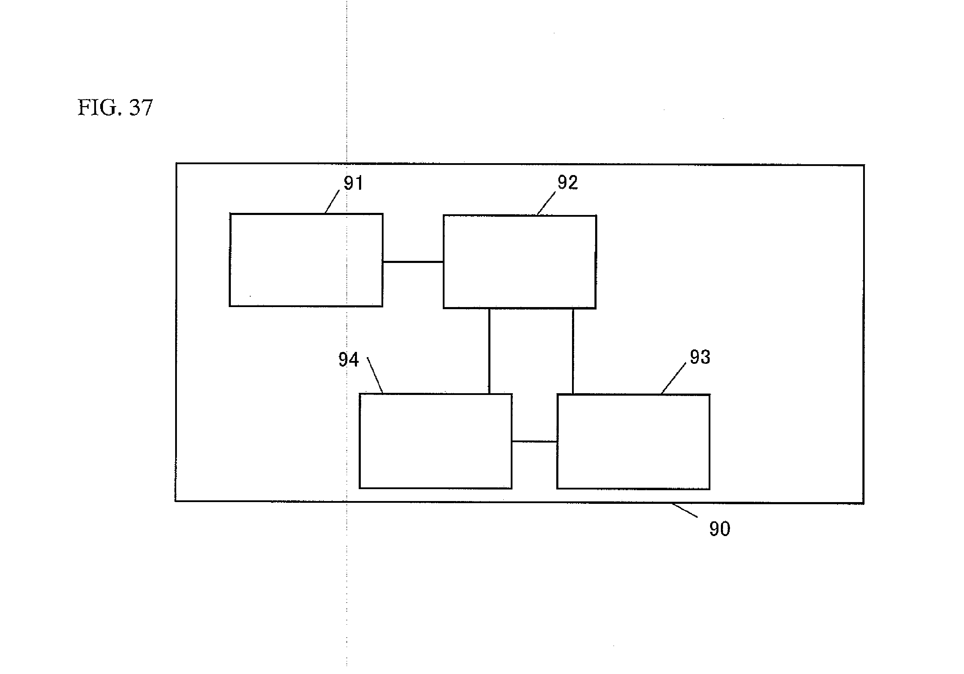

Fig. 37 is a diagram showing a configuration of the buffer node 90 according to the embodiment.

In Fig. 37, a lower layer processing part 91 performs processes such as modulation, demodulation, and access control, an IP processing part 92 performs packet forwarding and the like using the Internet protocol (IP), a buffer memory 93 is a storage apparatus for storing received packets temporarily, and a buffer management part 94 manages input/output of the buffer.

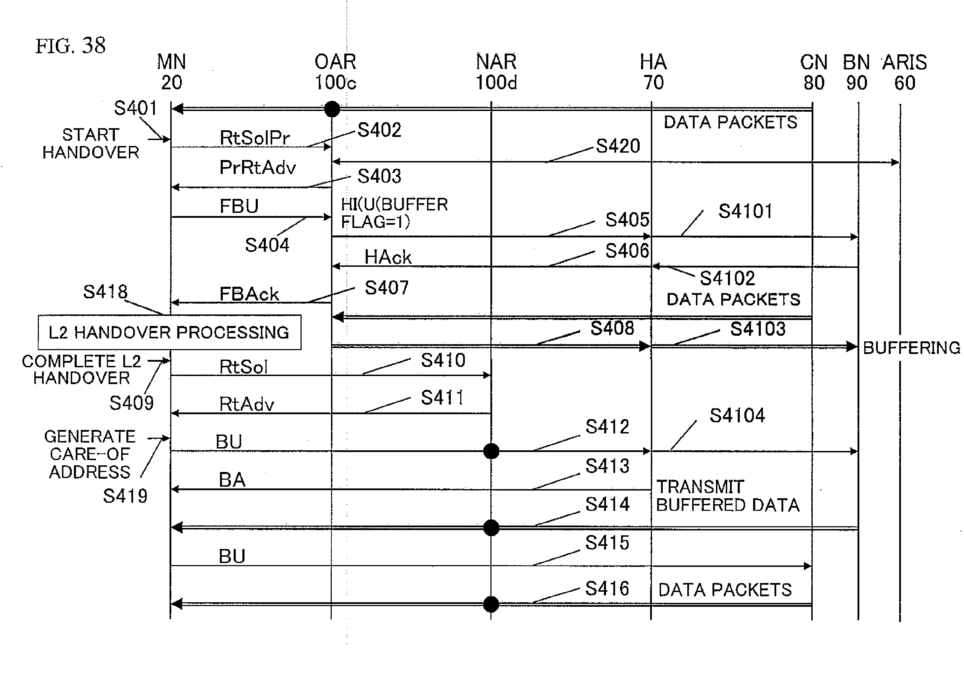

Next, operations of the mobile communication system according to the embodiment will be explained with reference to Fig. 38.

In Fig. 38, operations from start of the handover of the mobile communication apparatus (MN) 20 (step S401) to the transmission processing of a handover initiate message (HI) in the pre-movement source access router apparatus 100c (S405) are same as in the embodiment 1 in the case where the pre-movement source access router apparatus does not comply with a Fast Mobile IP.

Next, the home agent apparatus 70 verifies that the home address corresponding to the care-of address written in the old care-of address field 1701 of the handover initiate message 1700, namely, the home address of the mobile communication apparatus 20, exists in a binding cache. Further, when an U-flag 1703 instructing buffering is set in the handover initiate message 1700, the home agent apparatus sends a buffering request message 2000 to the buffer node 90 which has been previously registered (step S4101).

When the buffer node 90 receives the message, it checks whether the data storage required of the buffer memory is possible or not, and informs the home agent apparatus of this by means of a buffer reply message (step S4102).

If the home agent apparatus 70 receives the notification that the buffer node 90 can store data, the home agent apparatus 40 sends a handover acknowledgement message (HACK) 1800 indicating that data-buffering during the handover will be undertaken by the access router apparatus 100c (step S406).

Next, after the access router apparatus 100c receives the handover acknowledgement message 1800, it sends a fast binding acknowledgement message (FBACK) to the mobile communication apparatus 20 (step S407).

After that, packets transmitted from the correspondent node 80 to the pre-movement source access router apparatus 100c are transmitted from the pre-movement source access router apparatus 100c to the home agent apparatus 70 (step S408).

The home agent apparatus 70 has received the notification that the buffering is possible from the buffer node 90, and therefore, transmits the received packets to the buffer node 90 (step S4103). Then, the buffer node 90 stores the forwarded data addressed to the mobile communication apparatus in its buffer memory.

On the other hand, after the mobile communication apparatus 20 receives a fast binding acknowledgement message 1900 from the access router apparatus 100c, the mobile communication apparatus 20 performs the handover process in a lower layer (step S418), and when the handover process in the lower layer is completed, the mobile communication apparatus 20 issues to an IP layer a trigger indicating that the handover process in the lower layer has been completed (step S409). Then, after the handover process in the lower layer has been completed, the mobile communication apparatus 20 sends a router solicitation message (RtSol) to the movement-destination access router apparatus 100d (step S410).

The access router apparatus 100d, after receiving the router solicitation message, sends a router advertisement message including at least its own subnet prefix to the mobile communication apparatus 20 (step S411).

Next, the mobile communication apparatus 20, after receiving the router advertisement message from the access router apparatus 100d, generates a care-of address (step S419). After that, the mobile communication apparatus 20 sends a binding update message (BU) 2200 including the generated care-of address and its own home address to the home agent apparatus 70 through the access router apparatus 100d to notify the home agent apparatus 70 of the care-of address of the movement-destination sub-network (step S412).

Next, the home agent apparatus 70, after receiving the binding update message 2200, updates a binding cache 2300. Then, the home agent apparatus 70 transmits the buffer-packet transmission start message to the buffer node 90 and dictates the transmission of the stored data to the care-of address of the movement-destination 4202 in the buffer-packet transmission start message (step S4104).

Upon receipt of the buffer-packet transmission start message, the buffer node 90 starts to transmit data stored in the buffer memory 93 which is addressed to the mobile communication apparatus 20, to the designated care-of address (step S414).

The home agent apparatus 70 sends a binding acknowledgement message (BA) to the mobile communication apparatus 20 through the access router apparatus 100d as a reply to the binding update message 2200 (step S413).

The mobile communication apparatus 20 receives the binding acknowledgement message from the home agent apparatus 70 and verifies that a location registration has been completed.

Furthermore, the mobile communication apparatus 20 sends the binding update message 2200 to the correspondent node 80 in accordance with the standard mobile IP procedure (step S415) . After the correspondent node 80 receives the binding update message 2200, it updates the stored binding cache 2300 and directly performs communications with the mobile communication apparatus 20 (step S416).

As described above, when the home agent apparatus 70 receives a request from the access router apparatus for buffering data addressed to the mobile communication apparatus being managed, the home agent apparatus 70 does not buffer data itself but forwards data to the buffer node 90 which has previously been registered and makes the buffer node 90 store the data. Therefore, the workload of home agent apparatus 70 for storing data is reduced. Additionally, since the home agent apparatus 70 designates a buffer node 90 which exists on the movement-destination sub-network of the mobile communication apparatus 20, the forwarding time when forwarding the stored data to the mobile communication apparatus 20 after the completion of the handover can be shortened, as compared with the case when the buffer node exists on the same network as the home agent apparatus 70 or on the pre-movement sub-network.

### Industrial Applicability

The invention is useful when the mobile communication apparatus moves to a different sub-network, and preferable in the case where the pre-movement source access router apparatus or the movement-destination access router apparatus does not comply with Fast Mobile IP.

## Claims

1. A mobile communication method, comprising:
a step in which a mobile communication apparatus moves from a pre-movement source access router apparatus to a movement-destination access router apparatus and determines whether the pre-movement source access router apparatus connected therewith complies with Fast Mobile IP or not;
a step in which the mobile communication apparatus during its movement detects a signal from the movement-destination access router apparatus; and
a step in which, in the case where the mobile communication apparatus has determined that the pre-movement source access router apparatus does not comply with Fast Mobile IP, when detecting the signal, the mobile communication apparatus sends a router solicitation for proxy including a lower layer address of the movement-destination access router apparatus to the home agent apparatus through the pre-movement source access router,
the home agent apparatus after receiving the router solicitation for proxy (see page 58 lines 1-4) searches an access router information list for information on the movement-destination access router apparatus based on the lower layer address of the movement-destination access router apparatus, and if the home agent apparatus determines that the movement-destination access router apparatus complies with Fast Mobile IP, the home agent apparatus sends a proxy router advertisement in whose new router prefix field is written the IP address obtained from information on the access router apparatus which corresponds to the lower layer address,
the mobile communication apparatus receives the proxy router advertisement message through the pre-movement source access router and acquires the IP address written in the new router prefix field as information on the movement destination access router apparatus, and
the mobile communication apparatus sends a fast binding update message to the home agent apparatus through the pre movement source access router wherein the IP address included in the information on the movement destination access router is written in the replacement care-of address field,
the home agent apparatus, after receiving the fast binding update message, transmits the handover initiate message to the IP address of the movement destination access router indicated in the replacement care-off address field of the fast binding update message wherein the U-flag for instructing the movement destination access router to buffer packets is set,
the home agent apparatus receives packets addressed to the home address of the mobile communication apparatus and forwards them to the movement destination access router.

2. The mobile communication method according to claim 1, wherein the home agent apparatus makes inquiries about information on the movement-destination access router apparatus to an access router information server apparatus storing the information on access router apparatuses, in accordance with the request by the mobile communication apparatus, and gives the information to the mobile communication apparatus.

3. The mobile communication method according to anyone of claims 1 to 2, further comprising:
a step in which when the home agent apparatus could not acquire information on the movement-destination access router apparatus, the home agent apparatus notifies the mobile communication apparatus accordingly.

4. A mobile communication system comprising a network having plural subnetworks, access router apparatuses connected to the sub-networks, a mobile communication apparatus making packet-communications with the network through the access router apparatuses, a home agent apparatus connected to the network which implements mobile management of the mobile communication apparatus moving between sub-networks, and at least one correspondent node connecting to the network, which makes communication with the mobile communication apparatus, in which the access router apparatuses which comply with Fast Mobile IP are intermixed with those which do not comply with it, and the mobile communication apparatus, after moving to a different sub-network, makes a location registration to the home agent apparatus to continue the communication with the correspondent node,
wherein the mobile communication apparatus has a function of determining whether the access router apparatus complies with Fast Mobile IP or not, and if it determines that the pre-movement source access router apparatus complies with Fast Mobile IP, acquires information on the movement-destination access router apparatus from the pre-movement source access router apparatus to implement a Fast Mobile IP procedure, and if the mobile communication apparatus determines that the pre-movement source access router apparatus does not comply with Fast Mobile IP, the mobile communication apparatus sends a router solicitation for proxy including a lower layer address of the movement-destination access router apparatus to the home agent apparatus through the pre-movement source access router, the home agent apparatus after receiving the router solicitation for proxy searches an access router information list for information on the movement-destination access router apparatus based on the lower layer address of the movement-destination access router apparatus, and if the home agent apparatus determines that the movement-destination access router apparatus complies with Fast Mobile IP, the home agent apparatus sends a proxy router advertisement in whose new router prefix field is written the IP address obtained from information on the access router apparatus which corresponds to the lower layer address to the mobile communication apparatus in response to the request,
the mobile communication apparatus receives the proxy router advertisement message through the pre-movement source access router and acquires the IP address written in the new router prefix field as information on the movement destination access router apparatus and the mobile communication apparatus sends a fast binding update message to the home agent apparatus through the pre movement source access router wherein the IP address included in the information on the movement destination access router is written in the replacement care-of address field,
the home agent apparatus, after receiving the fast binding update message, transmits the handover initiate message to the IP address of the movement destination access router indicated in the replacement care-off address field of the fast binding update message wherein the U-flag for instructing the movement destination access router to buffer packets is set,
the home agent apparatus receives packets addressed to the home address of the mobile communication apparatus and forwards them to the movement destination access router.

## Patentansprüche

1. Mobilkommunikationsverfahren, aufweisend:
einen Schritt, in dem sich eine Mobilkommunikationsvorrichtung von einer Prä-Bewegungs-Quell-Zugangsroutervorrichtung zu einer Bewegungs-Ziel-Zugangsroutervorrichtung bewegt und bestimmt, ob die dabei angeschlossene Prä-Bewegungs-Quell-Zugangsroutervorrichtung mit dem Fast Mobile IP übereinstimmt oder nicht;
einen Schritt, in dem die Mobilkommunikationsvorrichtung während ihrer Bewegung ein Signal von der Bewegungs-Ziel-Zugangsroutervorrichtung erkennt; und
einen Schritt, in dem die Mobilkommunikationsvorrichtung bestimmt hat, dass die Prä-Bewegungs-Quell-Zugangsroutervorrichtung nicht mit dem Fast Mobile IP übereinstimmt, wobei bei Erkennen des Signals die Mobilkommunikationsvorrichtung eine Router-Abfrage für Proxy einschließlich einer Adresse der unteren Schicht der Bewegungs-Ziel-Zugangsroutervorrichtung an die Heimagentvorrichtung durch die Prä-Bewegungs-Quell-Zugangsrouter sendet,
wobei die Heimagentvorrichtung nach Empfangen der Router-Abfrage für Proxy (siehe Seite 58, Zeilen 1-4) eine Zugangsrouterinformationsliste für Information über die Bewegungs-Ziel-Zugangsroutervorrichtung auf Basis der Adresse der unteren Schicht der Bewegungs-Ziel-Zugangsroutervorrichtung sucht, und wenn die Heimagentvorrichtung bestimmt, dass die Bewegungs-Ziel-Zugangsroutervorrichtung mit Fast Mobile IP übereinstimmt, sendet die Heimagentvorrichtung eine Proxy-Router-Bekanntgabe, in deren neuem Router-Präfixfeld die von der Information auf der Zugangsroutervorrichtung erhaltene IP-Adresse geschrieben ist, die der Adresse der unteren Schicht entspricht,
wobei die Mobilkommunikationsvorrichtung die Proxy-Router-Bekanntgabe-Mitteilung durch den Prä-Bewegungs-Quell-Zugangsrouter empfängt und die im neuen Router-Präfixfeld geschriebene IP-Adresse als Information auf der Bewegungs-Ziel-Zugangsroutervorrichtung anfordert, und
wobei die Mobilkommunikationsvorrichtung sendet eine schnelle Bindungsaktualisierungsnachricht an die Heimagentvorrichtung durch den Prä-Bewegungs-Quell-Zugangsrouter, wobei die in der Information auf dem Bewegungs-Ziel-Zugangsrouter enthaltene IP-Adresse in das Ersatz-Care-of-Adressfeld geschrieben wird,
wobei die Heimagentvorrichtung, nach Empfangen der schnellen Bindungsaktualisierungsnachricht, die Handover-Initialisierungsmitteilung an die IP-Adresse des im Ersatz-Care-of-Adressfeld angegebenen Bewegungs-Ziel-Zugangsrouters sendet, der im Ersatz-Care-of-Adressfeld der schnellen Bindungsaktualisierungsnachricht angegeben ist, wobei die U-Flagge zum Anweisen des Bewegungs-Ziel-Zugangsrouters zum Puffern von Paketen festgelegt wird,
wobei die Heimagentvorrichtung an die Heimatadresse der Mobilkommunikationsvorrichtung adressierte Pakete empfängt und diese an den Bewegungs-Ziel-Zugangsrouter weiterleitet.

2. Mobilkommunikationsverfahren nach Anspruch 1, wobei die Heimagentvorrichtung Anfragen bezüglich Information auf der Bewegungs-Ziel-Zugangsroutervorrichtung an eine Zugangsrouterinformationsservervorrichtung vornimmt, die, in Übereinstimmung mit der Anforderung durch die Mobilkommunikationsvorrichtung, die Information auf Zugangsroutervorrichtungen speichert, und die die Information an die Mobilkommunikationsvorrichtung gibt.

3. Mobilkommunikationsverfahren nach einem der Ansprüche 1 bis 2, ferner aufweisend:
einen Schritt, wenn die Heimagentvorrichtung die Information auf der Bewegungs-Ziel-Zugangsroutervorrichtung nicht hat erfassen können, benachrichtigt die Heimagentvorrichtung die Mobilkommunikationsvorrichtung entsprechend.

4. Mobilkommunikationssystem, umfassend ein mehrere Sub-Netzwerke aufweisendes Netzwerk, mit den Sub-Netzwerken verbundene Zugangsroutervorrichtungen, eine Paketkommunikationen mit dem Netzwerk durch die Zugangsroutervorrichtungen ausführende Mobilkommunikationsvorrichtung, eine mit dem Netzwerk verbundene Heimagentvorrichtung, die mobiles Management der Mobilkommunikationsvorrichtung bei Bewegen zwischen den Sub-Netzwerken implementiert, und mindestens einen korrespondierenden Knoten zum Netzwerk, der Kommunikation mit der Mobilkommunikationsvorrichtung, in der die Zugangsroutervorrichtungen, die mit Fast Mobile IP übereinstimmen, mit denen vermischt werden, die nicht damit übereinstimmen, und wobei die Mobilkommunikationsvorrichtung nach einem Bewegen zu einem anderen Sub-Netzwerk eine Standortregistrierung bei der Heimagentvorrichtung ausführt, um die Kommunikation mit dem übereinstimmenden Knoten fortzusetzen,
wobei die Mobilkommunikationsvorrichtung eine Funktion zum Bestimmen hat, ob die Zugangsroutervorrichtung mit Fast Mobile IP übereinstimmt oder nicht, und, wenn sie bestimmt, dass die Prä-Bewegungs-Quell-Zugangsroutervorrichtung mit Fast Mobile IP übereinstimmt, sie Information über die Bewegungs-Ziel-Zugangsroutervorrichtung von der Prä-Bewegungs-Quell-Zugangsroutervorrichtung anfordert, um einen Fast-Mobile-IP-Vorgang zu implementieren, und wenn die Mobilkommunikationsvorrichtung bestimmt, dass die Prä-Bewegungs-Quell-Zugangsroutervorrichtung nicht mit Fast Mobile IP übereinstimmt, sendet die Mobilkommunikationsvorrichtung eine Router-Abfrage für Proxy einschließlich einer Adresse der unteren Schicht der Bewegungs-Ziel-Zugangsroutervorrichtung an die Heimagentvorrichtung durch die Prä-Bewegungs-Quell-Zugangsroutervorrichtung, wobei die Heimagentvorrichtung nach Empfangen der Router-Abfrage für Proxy nach einer Zugangsrouterinformationsliste für Information auf der Bewegungs-Ziel-Zugangsroutervorrichtung auf Basis der Adresse der unteren Schicht der Bewegungs-Ziel-Zugangsroutervorrichtung sucht, und wenn die Heimagentvorrichtung bestimmt, dass die Bewegungs-Ziel-Zugangsroutervorrichtung mit Fast Mobile IP übereinstimmt, sendet die Heimagentvorrichtung eine Proxy-Router-Bekanntgabe, in deren neuem Router-Präfixfeld die von der Information auf der Zugangsroutervorrichtung erhaltene IP-Adresse, die der Adresse der unteren Schicht an die Mobilkommunikationsvorrichtung als Antwort auf die Anforderung entspricht, geschrieben ist,
wobei die Mobilkommunikationsvorrichtung die Proxy-Router-Bekanntgabe-Mitteilung durch den Prä-Bewegungs-Quell-Zugangsrouter empfängt und die im neuen Router-Präfixfeld geschriebene IP-Adresse als Information auf der Bewegungs-Ziel-Zugangsroutervorrichtung anfordert, und die Mobilkommunikationsvorrichtung eine schnelle Bindungsaktualisierungsnachricht an die Heimagentvorrichtung durch den Prä-Bewegungs-Quell-Zugangsrouter sendet, wobei die in der Information auf dem Bewegungs-Ziel-Zugangsrouter enthaltene IP-Adresse in das Ersatz-Care-of-Adressfeld geschrieben wird,
wobei die Heimagentvorrichtung, nach Empfangen der schnellen Bindungsaktualisierungsnachricht die Handovereinleitungsmitteilung an die im Ersatz-Care-of-Adressfeld der schnellen Bindungsaktualisierungsnachricht des Bewegungs-Ziel-Zugangsrouters angegebene IP-Adresse sendet, wobei die die U-Flagge zum Anweisen des Bewegungs-Ziel-Zugangsrouters zum Puffern von Paketen festgelegt wird,
wobei die Heimagentvorrichtung an die Heimatadresse der Mobilkommunikationsvorrichtung adressierte Pakete empfängt und diese an den Bewegungs-Ziel-Zugangsrouter weiterleitet.

## Revendications

1. Procédé de communication mobile, comprenant :
une étape dans laquelle un appareil de communication mobile passe d'un appareil routeur d'accès source en prémouvement à un appareil routeur d'accès cible en mouvement et détermine si l'appareil routeur d'accès source en prémouvement connecté à celui-ci est ou non conforme à Fast Mobile IP ;
une étape dans laquelle l'appareil de communication mobile en mouvement détecte un signal provenant de l'appareil routeur d'accès cible en mouvement ; et
une étape dans laquelle, dans le cas où l'appareil de communication mobile a déterminé que l'appareil routeur d'accès source en prémouvement n'est pas conforme à Fast Mobile IP,
et qu'il détecte le signal, l'appareil de communication mobile envoie une demande de routeur pour le proxy, y compris une adresse de couche inférieure de l'appareil routeur d'accès cible en mouvement à l'appareil agent domestique via l'appareil routeur d'accès source en prémouvement,
une fois la demande de routeur reçue pour le proxy (voir page 58, lignes 1 à 4), l'appareil agent domestique recherche sur une liste d'informations de routeur d'accès des informations sur l'appareil routeur d'accès cible en mouvement à partir de l'adresse de couche inférieure de l'appareil routeur d'accès cible en mouvement, et si l'appareil agent domestique détermine que l'appareil routeur d'accès cible en mouvement est conforme à Fast Mobile IP, l'appareil agent domestique envoie une annonce de routeur proxy dont le nouveau champ de préfixe de routeur contient l'adresse IP obtenue à partir des informations sur l'appareil routeur d'accès correspondant à l'adresse de couche inférieure,
l'appareil de communication mobile reçoit le message d'annonce de routeur proxy via le routeur d'accès source en prémouvement et obtient l'adresse IP inscrite dans le nouveau champ de préfixe de routeur à titre d'informations sur l'appareil routeur d'accès cible en mouvement, et
l'appareil de communication mobile envoie un message de mise à jour de liaison rapide à l'appareil agent domestique via le routeur d'accès source en prémouvement dans lequel l'adresse IP ajoutée aux informations sur le routeur d'accès cible en mouvement est inscrite dans le champ d'adresse temporaire de remplacement,
une fois le message de mise à jour de liaison rapide reçu, l'appareil agent domestique transmet le message de déclenchement de commutation à l'adresse IP du routeur d'accès cible en mouvement spécifié dans le champ d'adresse temporaire de remplacement du message de mise à jour de liaison rapide dans lequel est défini l'indicateur U permettant d'indiquer au routeur d'accès cible en mouvement de mettre des paquets en mémoire tampon,
l'appareil agent domestique reçoit des paquets envoyés à l'adresse domestique de l'appareil de communication mobile et les transmet au routeur d'accès cible en mouvement.

2. Procédé de communication mobile selon la revendication 1, dans lequel l'appareil agent domestique demande des informations sur l'appareil routeur d'accès cible en mouvement à un appareil serveur d'informations de routeur d'accès stockant les informations sur des appareils routeurs d'accès, conformément à la demande de l'appareil de communication mobile et fournit les informations à l'appareil de communication mobile.

3. Procédé de communication mobile selon l'une quelconque des revendications 1 à 2, comprenant en outre :
une étape dans laquelle, lorsqu'il n'a pas pu obtenir des informations sur l'appareil routeur d'accès cible en mouvement, l'appareil agent domestique en informe en conséquence l'appareil de communication mobile.

4. Système de communication mobile comprenant un réseau possédant plusieurs sous-réseaux, des appareils routeurs d'accès reliés aux sous-réseaux, un appareil de communication mobile communiquant des paquets au réseau via les appareils routeurs d'accès, un appareil agent domestique connecté au réseau qui met en oeuvre la gestion mobile de l'appareil de communication mobile en se déplaçant entre des sous-réseaux et au moins un noeud correspondant se connectant au réseau, qui communique avec l'appareil de communication mobile, dans lequel les appareils routeurs d'accès conformes à Fast Mobile IP sont mélangés à ceux non conformes à celui-ci et, après être passé à un sous-réseau différent, l'appareil de communication mobile enregistre un emplacement sur l'appareil agent domestique pour maintenir la communication avec le noeud correspondant,
dans lequel l'appareil de communication mobile possède une fonction permettant de déterminer si l'appareil routeur d'accès est ou non conforme à Fast Mobile IP et, s'il détermine que l'appareil routeur d'accès source en prémouvement est conforme à Fast Mobile IP, obtient des informations sur l'appareil routeur d'accès cible en mouvement auprès de l'appareil routeur d'accès source en prémouvement pour mettre en oeuvre une procédure Fast Mobile IP, et si l'appareil de communication mobile détermine que l'appareil routeur d'accès source en prémouvement n'est pas conforme à Fast Mobile IP, l'appareil de communication mobile envoie une demande de routeur pour le proxy, y compris une adresse de couche inférieure de l'appareil routeur d'accès cible en mouvement à l'appareil agent domestique via le routeur d'accès source en prémouvement, une fois la demande de routeur pour le proxy reçue, l'appareil agent domestique recherche dans une liste d'informations sur les routeurs d'accès des informations sur l'appareil routeur d'accès cible en mouvement en fonction de l'adresse de couche inférieure de l'appareil routeur d'accès cible en mouvement et si l'appareil agent domestique détermine que l'appareil routeur d'accès cible en mouvement est conforme à Fast Mobile IP, l'appareil agent domestique envoie une annonce de routeur proxy dont le nouveau champ de préfixe de routeur contient l'adresse IP obtenue à partir des informations sur l'appareil routeur d'accès correspondant à l'adresse de couche inférieure à l'appareil de communication mobile en réponse à la demande,
l'appareil de communication mobile reçoit le message d'annonce de routeur proxy via le routeur d'accès source en prémouvement et obtient l'adresse IP inscrite dans le nouveau champ de préfixe de routeur à titre d'informations sur l'appareil routeur d'accès cible en mouvement et l'appareil de communication mobile envoie un message de mise à jour de liaison rapide à l'appareil agent domestique via le routeur d'accès source en prémouvement dans lequel l'adresse IP figurant dans les informations sur le routeur d'accès cible en mouvement est inscrite dans le champ d'adresse temporaire de remplacement,
une fois le message de mise à jour de liaison rapide reçu, l'appareil agent domestique transmet le message de déclenchement de commutation à l'adresse IP du routeur d'accès cible en mouvement spécifié dans le champ d'adresse temporaire de remplacement du message de mise à jour de liaison rapide dans lequel est défini l'indicateur U permettant d'indiquer au routeur d'accès cible en mouvement de mettre des paquets en mémoire tampon,
l'appareil agent domestique reçoit des paquets envoyés à l'adresse domestique de l'appareil de communication mobile et les transmet au routeur d'accès cible en mouvement.
